(19) Europäisches Patentamt
European Patent Office
Office européen des brevets

(11) **EP 4 030 835 A1**

(12) **EUROPEAN PATENT APPLICATION**

(43) Date of publication:
**20.07.2022 Bulletin 2022/29**

(21) Application number: **21151634.9**

(22) Date of filing: **14.01.2021**

(51) International Patent Classification (IPC):
**H04W 52/02** (2009.01)   **H04W 68/02** (2009.01)
**H04W 68/00** (2009.01)   **H04W 72/04** (2009.01)

(52) Cooperative Patent Classification (CPC):
**H04W 68/02; H04W 52/0229;** H04W 52/0212;
H04W 68/005; H04W 72/042

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Panasonic Intellectual Property
Corporation
of America
Torrance, CA 90503 (US)**

(72) Inventors:
• **LI, Hongchao
  63225 Langen (DE)**
• **SUZUKI, Hidetoshi
  Osaka-shi, Osaka 540-6207 (JP)**

(74) Representative: **Grünecker Patent- und
Rechtsanwälte
PartG mbB
Leopoldstraße 4
80802 München (DE)**

(54) **USER EQUIPMENT AND BASE STATION INVOLVED IN PAGING**

(57)     The present disclosure relates to a user equipment, UE, comprising the following. A processor of the UE operates a paging function that includes monitoring of a downlink control channel for receiving, from a radio base station, a paging downlink control information, DCI, at a paging occasion based on whether a paging early indication, PEI, is detected at a preceding PEI resource monitored by the UE. In case the receiver does not detect the PEI at the monitored paging early indication resource, the processor determines to monitor for receiving the paging DCI at the paging occasion subsequent to the monitored PEI resource, in case a PEI detection is not reliable,
the processor determines that monitoring for receiving the paging DCI at the paging occasion subsequent to the monitored PEI resource is not required, in case a PEI detection is reliable.

Fig. 10

**Description**

**FIELD OF THE PRESENT DISCLOSURE**

The present disclosure is directed to methods, devices and articles in communication systems, such as 3GPP communication systems.

**TECHNICAL BACKGROUND**

Currently, the 3rd Generation Partnership Project (3GPP) works at the technical specifications for the next generation cellular technology, which is also called fifth generation (5G).

One objective is to provide a single technical framework addressing all usage scenarios, requirements and deployment scenarios (see e.g. section 6 of TR 38.913 version 16.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand a very broad bandwidth, however are different in that the URLLC service may preferably require ultra-low latencies.

A second objective is to achieve forward compatibility. Backward compatibility to Long Term Evolution (LTE, LTE-A) cellular systems is not required, which facilitates a completely new system design and/or the introduction of novel features.

**SUMMARY**

One non-limiting and exemplary embodiment facilitates providing procedures for facilitating a UE to perform a paging function.

In an embodiment, the techniques disclosed here feature a user equipment, UE, comprising the following. A processor of the UE operates a paging function that includes monitoring of a downlink control channel for receiving, from a radio base station, a paging downlink control information, DCI, at a paging occasion based on whether a paging early indication is detected at a preceding paging early indication resource monitored by the UE. In case the receiver does not detect the paging early indication at the monitored paging early indication resource,
the processor determines to monitor for receiving the paging DCI at the paging occasion subsequent to the monitored paging early indication resource, in case a paging early indication detection is not reliable,
the processor determines that monitoring for receiving the paging DCI at the paging occasion subsequent to the monitored paging early indication resource is not required, in case a paging early indication detection is reliable.

It should be noted that general or specific embodiments may be implemented as a system, a method, an integrated circuit, a computer program, a storage medium, or any selective combination thereof. For instance, an integrated circuit can control a process of a UE or base station.

Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

**BRIEF DESCRIPTION OF THE FIGURES**

In the following exemplary embodiments are described in more detail with reference to the attached figures and drawings.

**Fig. 1**      shows an exemplary architecture for a 3GPP NR system;
**Fig. 2**      is a schematic drawing that shows a functional split between NG-RAN and 5GC,
**Fig. 3**      is a sequence diagram for RRC connection setup/reconfiguration procedures,
**Fig. 4**      is a schematic drawing showing usage scenarios of Enhanced mobile broadband (eMBB), Massive Machine Type Communications (mMTC) and Ultra Reliable and Low Latency Communications (URLLC),
**Fig. 5**      is a block diagram showing an exemplary 5G system architecture for a non-roaming scenario,
**Fig. 6**      illustrates the possible RRC state changes,
**Fig. 7**      illustrates a message exchange for a paging procedure,

**Fig. 8**    illustrates an exemplary and simplified structure of a UE and gNB,

**Fig. 9**    illustrates a structure of the UE according to an exemplary implementation of an improved paging procedure,

**Fig. 10**    is a flow diagram for the UE behavior, according to an exemplary implementation of the improved paging procedure,

**Fig. 11**    illustrates a structure of the base station that participates in the exemplary implementation of the improved paging procedure,

**Fig. 12**    is a flow diagram for the base station behavior that participates in the exemplary implementation of the improved paging procedure,

**Fig. 13**    illustrates a time line and an exemplary exchange between the gNB and the UE for the improved paging procedure,

**Fig. 14**    is a flow diagram for the UE behavior, according to a first solution of the improved paging procedure,

**Fig. 15**    illustrates a time line and an exemplary exchange between the gNB and the UE for the first solution of the improved paging procedure,

**Fig. 16**    is a flow diagram for the UE behavior, according to a second solution of the improved paging procedure,

**Fig. 17**    illustrates a time line and an exemplary exchange between the gNB and the UE for the second solution of the improved paging procedure,

**Fig. 18**    is a flow diagram for the UE behavior, according to a third solution of the improved paging procedure, and

**Fig. 19**    is a flow diagram for the UE behavior, according to a fourth solution of the improved paging procedure.

## DETAILED DESCRIPTION

*5G NR system architecture and protocol stacks*

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE.

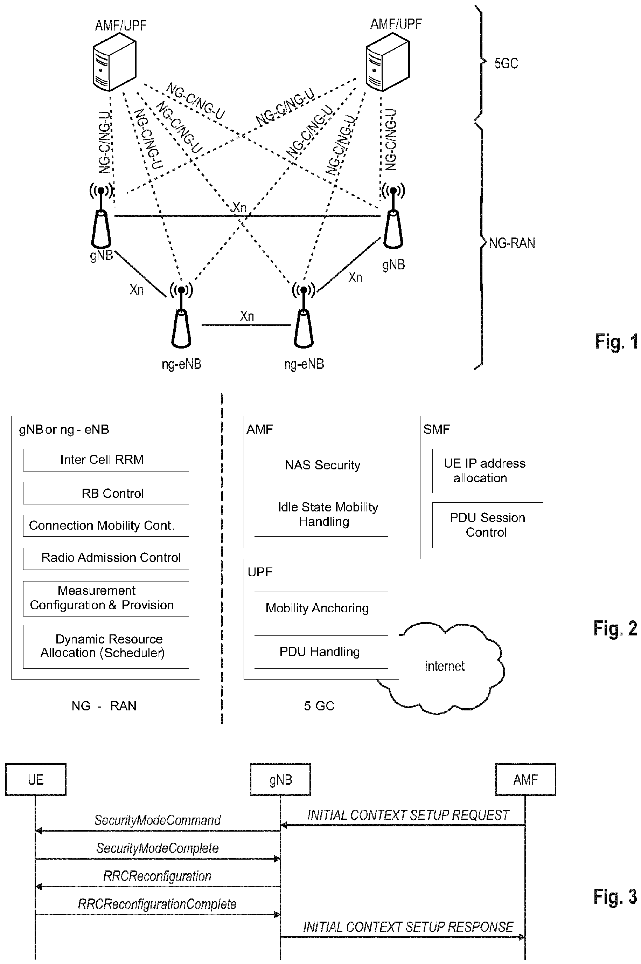

The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v16.4.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability ($1-10^{-5}$ within 1ms).

Finally, mMTC may preferably require high connection density (1,000,000 devices/km$^2$ in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration $T_u$ and the subcarrier spacing $\Delta f$ are directly related through the formula $\Delta f = 1 / T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v16.3.0, e.g. section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

*5G NR functional split between NG-RAN and 5GC*

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:

- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from the AMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:

- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;

- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:

- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:

- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

*RRC connection setup and reconfiguration procedures*

**Fig. 3** illustrates some interactions between a UE, gNB, and AMF (a 5GC entity) in the context of a transition of the UE from RRC_IDLE to RRC_CONNECTED for the NAS part (see TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a Security-ModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element (IE) to the UE via the signaling radio bearer. The UE then performs an uplink transmission or a downlink reception based on the resource allocation configuration.

*Usage Scenarios of IMT for 2020 and beyond*

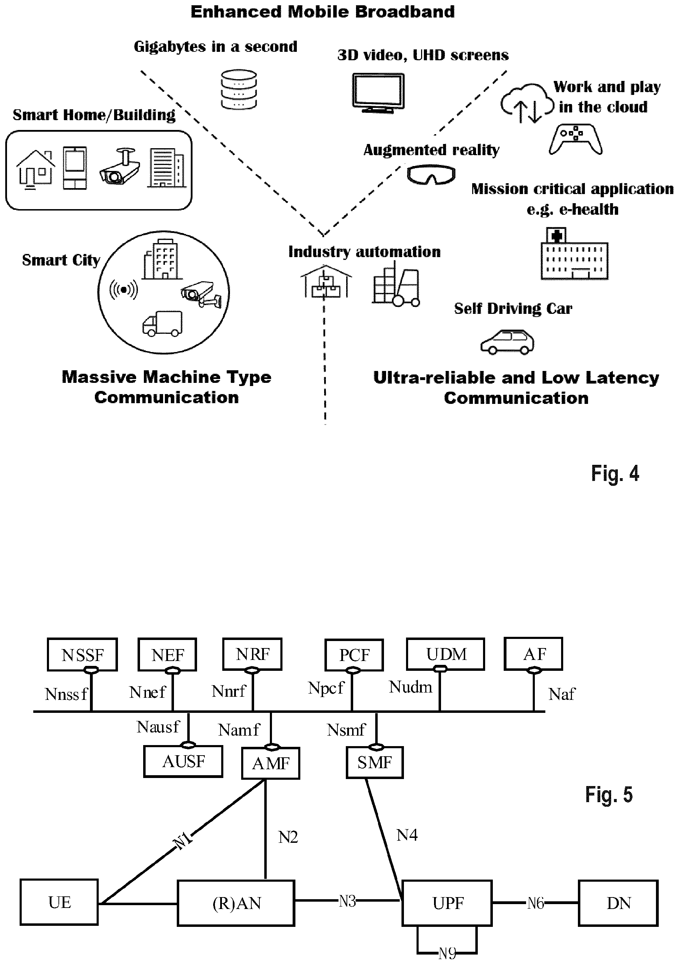

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.20183 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913 version 16.0.0. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to $10^6$ level), higher availability, packet sizes of up to 256 bytes, time synchronization down to the order of a few $\mu$s where the value can be one or a few $\mu$s depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also, PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

*QoS control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.7.0, section 4.2.3). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMBB and mMTC services to at least one of functions (for example NEF, AMF, SMF, PCF,UPF, etc.) of the 5GC to establish a PDU session including a radio bearer between a gNodeB and a UE in accordance with the QoS requirement and control circuitry, which, in operation, performs the services using the established PDU session.

*UE identifications*

RNTI stands for Radio Network Temporary Identifier. For instance, an RNTI can used to differentiate and identify a UE in the radio cell. Further, an RNTI can also identify a specific radio channel, a group of UEs in case of paging, a group of UEs for which power control is issued by the eNB, system information transmitted for all the UEs by 5G gNB. 5G NR defines numerous different identifications for the UE, some of which are presented in the following table (see 3GPP TS 38.321 v16.3.0, section 7.1).

**Table: RNTI values.**

| Value (hexa-decimal) | RNTI |
|---|---|
| 0000 | N/A |
| 0001-FFF2 | RA-RNTI, MSGB-RNTI, Temporary C-RNTI, C-RNTI, CI-RNTI, MCS-C-RNTI, CS-RNTI, TPC-PUCCH-RNTI, TPC-PUSCH-RNTI, TPC-SRS-RNTI, INT-RNTI, SFI-RNTI, SP-CSI-RNTI, PS-RNTI, SL-RNTI, SLCS-RNTI SL Semi-Persistent Scheduling V-RNTI, and AI-RNTI |
| FFF3-FFFD | Reserved |
| FFFE | P-RNTI |
| FFFF | SI-RNTI |

**Table: RNTI usage**

| RNTI | Usage | Transport Channel | Logical Channel |
|---|---|---|---|
| P-RNTI | Paging and System Information change notification | PCH | PCCH |
| SI-RNTI | Broadcast of System Information | DL-SCH | BCCH |
| RA-RNTI | Random Access Response | DL-SCH | N/A |
| MSGB-RNTI | Random Access Response for 2-step RA type | DL-SCH | CCCH, DCCH |
| Temporary C-RNTI | Contention Resolution (when no valid C-RNTI is available) | DL-SCH | CCCH, DCCH |
| Temporary C-RNTI | Msg3 transmission | UL-SCH | CCCH, DCCH, DTCH |

(continued)

| RNTI | Usage | Transport Channel | Logical Channel |
|---|---|---|---|
| C-RNTI, MCS-C-RNTI | Dynamically scheduled unicast transmission | UL-SCH | DCCH, DTCH |
| C-RNTI | Dynamically scheduled unicast transmission | DL-SCH | CCCH, DCCH, DTCH |
| MCS-C-RNTI | Dynamically scheduled unicast transmission | DL-SCH | DCCH, DTCH |
| C-RNTI | Triggering of PDCCH ordered random access | N/A | N/A |
| CS-RNTI | Configured scheduled unicast transmission (activation, reactivation and retransmission) | DL-SCH, UL-SCH | DCCH, DTCH |
| CS-RNTI | Configured scheduled unicast transmission (deactivation) | N/A | N/A |
| TPC-PUCCH-RNTI | PUCCH power control | N/A | N/A |
| TPC-PUSCH-RNTI | PUSCH power control | N/A | N/A |
| TPC-SRS-RNTI | SRS trigger and power control | N/A | N/A |
| INT-RNTI | Indication pre-emption in DL | N/A | N/A |
| SFI-RNTI | Slot Format Indication on the given cell | N/A | N/A |
| SP-CSI-RNTI | Activation of Semi-persistent CSI reporting on PUSCH | N/A | N/A |
| CI-RNTI | Cancellation indication in UL | N/A | N/A |
| PS-RNTI | DCP to indicate whether to start *drx-onDurationTimer* for associated DRX cycle | N/A | N/A |
| SL-RNTI | Dynamically scheduled sidelink transmission | SL-SCH | SCCH, STCH |
| SLCS-RNTI | Configured scheduled sidelink transmission (activation, reactivation and retransmission) | SL-SCH | SCCH, STCH |
| SLCS-RNTI | Configured scheduled sidelink transmission (deactivation) | N/A | N/A |
| SL Semi-Persistent Scheduling V-RNTI (NOTE 2) | Semi-Persistently scheduled sidelink transmission for V2X sidelink communication (activation, reactivation and retransmission) | SL-SCH | STCH |
| SL Semi-Persistent Scheduling V-RNTI (NOTE 2) | Semi-Persistently scheduled sidelink transmission for V2X sidelink communication (deactivation) | N/A | N/A |
| AI-RNTI | Availability indication on the given cell | N/A | N/A |
| NOTE 1: The usage of MCS-C-RNTI is equivalent to that of C-RNTI in MAC procedures (except for the C-RNTI MAC CE). ||||
| NOTE 2: The MAC entity uses SL Semi-Persistent Scheduling V-RNTI to control semi-persistently scheduled sidelink transmission on SL-SCH for V2X sidelink communication as specified in clause 5.14.1.1 of TS 36.321 [22]. ||||

Another UE identification that can be used, for example in connection with paging, is UE_ID: 5G-S-TMSI mod 1024.

*RRC States (RRC_Connected, RRC_Inactive)*

In LTE, the RRC state machine consisted of only two states, the RRC idle state (mainly characterized by high power savings, UE autonomous mobility and no established UE connectivity towards the core network) and the RRC connected state in which the UE can transmit user plane data while mobility is network-controlled to support lossless service continuity. In connection with 5G NR, the LTE-related RRC state machine is extended with an inactive state (see e.g. TS 38.331 v16.2.0, Figures 4.2.1-1 and 4.2.1-2), as explained in the following.

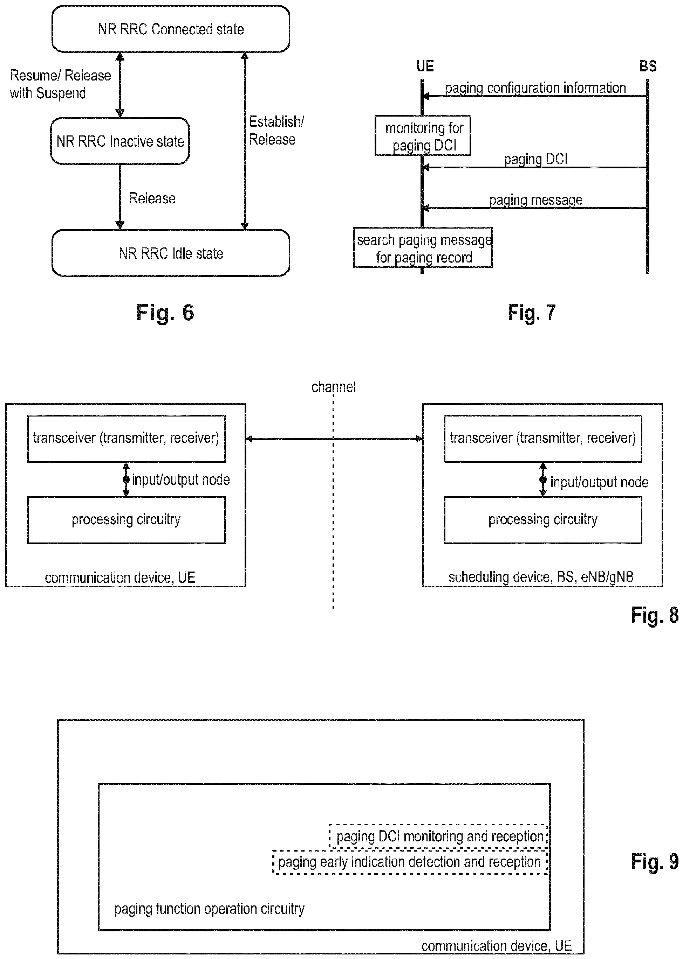

The RRC in NR 5G (see TS 38.331, section 4) supports the following three states, RRC Idle, RRC Inactive, and RRC Connected. A UE is either in RRC_CONNECTED state or in RRC_INACTIVE state when an RRC connection has been established. If this is not the case, i.e. no RRC connection is established, the UE is in RRC_IDLE state. The following state transitions are possible as illustrated in **Fig. 6**:

- from RRC_IDLE to RRC_CONNECTED, following e.g. the "connection establishment" procedure;
- from RRC_CONNECTED to RRC_IDLE, following e.g. the "connection release" procedure;
- from RRC_CONNECTED to RRC_INACTIVE, following e.g. the "connection release with suspend" procedure;
- from RRC_INACTIVE to RRC_CONNECTED, following e.g. the "connection resume" procedure;
- from RRC_INACTIVE to RRC_IDLE (uni-directional), following e.g. the "connection release" procedure.

The new RRC state, RRC Inactive, is defined for the new radio technology of 5G 3GPP, so as to provide benefits when supporting a wider range of services such as the eMBB (enhanced Mobile Broadband), mMTC (massive Machine Type Communications) and URLLC (Ultra-Reliable and Low-Latency Communications) which have very different requirements in terms of signalling, power saving, latency etc. The new RRC Inactive state shall thus be designed to allow minimizing signaling, power consumption and resource costs in the radio access network and core network while still allowing e.g. to start data transfer with low delay.

According to an exemplary 5G NR implementation, the different states are characterized as follows (see section 4.2.1 of TS 38.331):

*"RRC_IDLE:*

- *A UE specific DRX may be configured by upper layers;*

- *UE controlled mobility based on network configuration;*

- *The UE:*

  - *Monitors Short Messages transmitted with P-RNTI over DCI (see clause 6.5);*

  - *Monitors a Paging channel for CN paging using 5G-S-TMSI;*

  - *Performs neighbouring cell measurements and cell (re-)selection;*

  - *Acquires system information and can send SI request (if configured).*

  - *Performs logging of available measurements together with location and time for logged measurement configured UEs.*

*- RRC_INACTIVE:*

- *A UE specific DRX may be configured by upper layers or by RRC layer;*

- *UE controlled mobility based on network configuration;*

- *The UE stores the UE Inactive AS context;*

- *A RAN-based notification area is configured by RRC layer;*
  *The UE:*

  - *Monitors Short Messages transmitted with P-RNTI over DCI (see clause 6.5);*

- Monitors a Paging channel for CN paging using 5G-S-TMSI and RAN paging using fulll-RNTI;

- Performs neighbouring cell measurements and cell (re-)selection;

- Performs RAN-based notification area updates periodically and when moving outside the configured RAN-based notification area;

- Acquires system information and can send SI request (if configured).

- Performs logging of available measurements together with location and time for logged measurement configured UEs.

- RRC_CONNECTED:

- The UE stores the AS context;

- Transfer of unicast data to/from UE;

- At lower layers, the UE may be configured with a UE specific DRX;

- For UEs supporting CA, use of one or more SCells, aggregated with the SpCell, for increased bandwidth;

- For UEs supporting DC, use of one SCG, aggregated with the MCG, for increased bandwidth;

- Network controlled mobility within NR and to/from E-UTRA;

- The UE:

- Monitors Short Messages transmitted with P-RNTI over DCI (see clause 6.5), if configured;

- Monitors control channels associated with the shared data channel to determine if data is scheduled for it;

- Provides channel quality and feedback information;

- Performs neighbouring cell measurements and measurement reporting;

- Acquires system information;

- Performs immediate MDT measurement together with available location reporting."

According to the characteristics of the RRC Inactive state, for the Inactive UE the connection (both for user plane and control plane) is maintained with RAN and the core network. More specifically, in RRC Inactive, although the connection still exists, it is suspended, or put differently the connection is not active anymore. On the other hand, in RRC Connected state, the connection exists and is active, e.g. in the sense that it is used for a data transmission. In RRC Idle state, the UE has no RRC connection with the RAN and the core network, which also means that e.g. the radio base station does not have any context of the UE and e.g. does not know the identification of the UE and does not have security parameters relating to the UE to be able to properly decode data transmitted by the UE (security e.g. ensures integrity of the transmitted data). UE context may be available in the core network, but would have to be fetched first by the radio base station.

In addition, the paging mechanism (may also be called e.g. notification mechanism) for user equipments in the radio cell is based on so called radio access network, RAN,-based notification areas (in short RNAs). The radio access network should be aware of the current RNA the user equipment is located in, and the user equipment may assist the gNB to track the UE moving among various RNAs. The RNA can be UE-specific.

Reference signals, CSI-RS

Several different types of reference signals (RS) are used for 5G NR (see 3GPP TS 38.211 v16.3.0 section 7.4.1). At least the following reference signals are available in 5G NR:

- CSI-RS, Channel State Information Reference Signal, usable for channel state information acquisition and beam management
- PDSCH DMRS, DeModulation Reference Signal, usable for the PDSCH demodulation
- PDCCH DMRS, DeModulation Reference Signal, usable for the PDCCH demodulation
- PBCH DMRS, DeModulation Reference Signal, usable for the PBCH demodulation
- PTRS, Phase Tracking Reference Signal, usable for phase tracking the PDSCH,
- Tracking Reference Signal, usable for time tracking
- RIM reference signals
- Positioning reference signals

As a DL-only signal, the CSI-RS, which the UE receives, can be used by the UE to estimate the channel and to report channel quality information back to the gNB (assists the gNB in modulation coding scheme selection, resource allocation, beamforming, MIMO rank selection). The CSI-RS can be configured for periodic, aperiodic (e.g. DCI triggered), or semi-persistent transmission with a configuration density by the gNB. The CSI-RS also can be used for interference measurement (IM) and fine frequency/time tracking purposes. Specific instances of CSI-RS can be configured for time/frequency tracking and mobility measurements. During MIMO operations, NR may use different antenna approaches based on the carrier frequency. At lower frequencies, the system uses a modest number of active antennas for MU-MIMO and adds FDD operations. In this case, the UE may use the CSI-RS to calculate the CSI and report it back in the UL direction.

The CSI-RS is UE-specific; nonetheless, multiple users can share the same CSI-RS resource. In particular, a UE-specific configuration of a CSI-RS does not necessarily mean that a transmitted CSI-RS can only be used by a single device, rather the same set of CSI-RS resources can be separately configured for multiple devices, which means that a single CSI-RS can be shared among multiple devices.

For instance, a single-port CSI-RS occupies a single resource element within a resource block in the frequency domain and one slot in the time domain. While the CSI-RS can be configured to occur anywhere in the resource block, in practice it is possible to impose some restrictions on the CSI-RS resource assignment so as to avoid collisions with other downlink physical channels and signals. As an example, the transmission of a configured CSI-RS can be such that it does not collide with a CORESET configured for the device, the DM-RS associated with the PDSCH transmissions and the SS block transmissions.

The 5G NR standard supports flexible CSI-RS configurations. In the time domain, the CSI-RS resource may start at any OFDM symbol of a slot and span 1, 2, or 4 OFDM symbols, e.g. depending on the number of configured antenna ports.

The Tracking Reference Signal, TRS, is a further reference signal that can be used for synchronizing the time and/or frequency with the gNB. Detailed information on the TRS according to current 5G definition can be found in TS 38.331 v16.3.0, section 6.3.2:

*NZP-CSI-RS-ResourceSet*

The IE *NZP-CSI-RS-ResourceSet* is a set of Non-Zero-Power (NZP) CSI-RS resources (their IDs) and set-specific parameters.

**NZP-CSI-RS-ResourceSet information element**

```
-- ASN1START
-- TAG-NZP-CSI-RS-RESOURCESET-START
NZP-CSI-RS-ResourceSet ::=              SEQUENCE {
    nzp-CSI-ResourceSetId               NZP-CSI-RS-ResourceSetId,
    nzp-CSI-RS-Resources                SEQUENCE (SIZE (1..maxNrofNZP-CSI-RS-
ResourcesPerSet)) OF NZP-CSI-RS-ResourceId,
    repetition                          ENUMERATED { on, off }  OPTIONAL,-- Need S
    aperiodicTriggeringOffset           INTEGER(0..6)   OPTIONAL,   -- Need S
    trs-Info                            ENUMERATED {true}OPTIONAL,   -- Need R
    ...,
    [[
    aperiodicTriggeringOffset-r16   INTEGER(0..31)  OPTIONAL   -- Need S
    ]]
}

-- TAG-NZP-CSI-RS-RESOURCESET-STOP
-- ASN1STOP
```

| ***NZP-CSI-RS-ResourceSet* field descriptions** |
|---|
| ***aperiodicTriggeringOffset, aperiodicTriggeringOffset-r16***<br>Offset X between the slot containing the DCI that triggers a set of aperiodic NZP CSI-RS resources and the slot in which the CSI-RS resource set is transmitted. For *aperiodicTriggeringOffset,* the value 0 corresponds to 0 slots, value 1 corresponds to 1 slot, value 2 corresponds to 2 slots, value 3 corresponds to 3 slots, value 4 corresponds to 4 slots, value 5 corresponds to 16 slots, value 6 corresponds to 24 slots. For *aperiodicTriggeringOffset-r16,* the value indicates the number of slots. The network configures only one of the fields. When neither field is included, the UE applies the value 0. |
| ***nzp-CSI-RS-Resources***<br>NZP-CSI-RS-Resources associated with this NZP-CSI-RS resource set (see TS 38.214 [19], clause 5.2). For CSI, there are at most 8 NZP CSI RS resources per resource set. |
| ***repetition***<br>Indicates whether repetition is on/off. If the field is set to off or if the field is absent, the UE may not assume that the NZP-CSI-RS resources within the resource set are transmitted with the same downlink spatial domain transmission filter (see TS 38.214 [19], clauses 5.2.2.3.1 and 5.1.6.1.2). It can only be configured for CSI-RS resource sets which are associated with *CSI-ReportConfig* with report of L1 RSRP or "no report". |
| ***trs-Info***<br>Indicates that the antenna port for all NZP-CSI-RS resources in the CSI-RS resource set is same. If the field is absent or released the UE applies the value *false* (see TS 38.214 [19], clause 5.2.2.3.1). |

Further information on the TRS is available from TS 38.214 v16.4.0, section 5.2.2.3.1.:
*trs-Info* in *NZP-CSI-RS-ResourceSet* is associated with a CSI-RS resource set and for which the UE can assume that the antenna port with the same port index of the configured NZP CSI-RS resources in the *NZP-CSI-RS-ResourceSet* is the same as described in Clause 5.1.6.1.1 and can be configured when reporting setting is not configured or when the higher layer parameter *reportQuantity* associated with all the reporting settings linked with the CSI-RS resource set is set to 'none'.

Furthermore, TS 38.214 v16.4.0 section 5.1.6.1.1, specifies the condition about how multiple CSI-RS are grouped into a TRS and restriction about configuration of each CSI-RS that are grouped into a TRS .

According to one example, system information signaling (e.g. one of the system information blocks) may provide the configuration of the TRS and/or the CSI-RS occasion(s) for idle and/or inactive UE(s). It may be possible that, in addition to system information, other signaling methods are supported to configure the TRS/CSI-RS occasions, e.g. dedicated RRC messages, e.g. the RRC release message.

*Downlink control channel monitoring, PDCCH, DCI*

Many of the functions operated by the UE involve the monitoring of a downlink control channel (e.g. the PDCCH, see 3GP TS 38.300 v16.4.0, section 5.2.3) to receive e.g. particular control information or data destined to the UE.

A non-exhaustive list of these functions is given in the following:

- a paging message monitoring function,
- a system information acquisition function,
- signaling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed, e.g., downlink control information, DCI) has basically the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v16.4.0 section 7.3.1).

*Paging Procedures in 5G NR*

An exemplary implementation of the paging function in 5G NR that involves PDCCH monitoring, according to the currently standardized version, will be explained in a simplified and abbreviated form in the following.

There are two different paging procedures in 5G NR, a RAN-based paging procedure (e.g. based on RAN-based notification areas) and a core-network-based paging procedure (see for instance 3GPP TS 38.300 v16.4.0, TS 38.304 v16.3.0, and TS 38.331 v16.2.0 referring to RAN paging and CN paging in several sections thereof, such as section 5.3.2 "Paging" in TS 38.331 or section 9.2.5 "Paging" in TS 38.300).

Paging allows the network to reach UEs in RRC_IDLE and RRC_INACTIVE state through Paging messages, and to notify UEs in RRC_IDLE, RRC_INACTIVE, and RRC_CONNECTED state of system information change and public warning information (such as ETWS/CMAS, Earthquake and Tsunami Warning System/ Commercial Mobile Alert System) indications through Short Messages. Both the paging messages and the Short Messages are addressed to the P-RNTI on the PDCCH (e.g. using the DCI_format 1_0) to be monitored by the UE. But while the actual paging messages (e.g. with the paging records) are then sent in a message on the PDSCH (as indicated by the PDCCH), the Short Messages can be sent over PDCCH directly.

While in RRC_IDLE the UE monitors the paging channels for CN-initiated paging, and in RRC_INACTIVE the UE also monitors paging channels for RAN-initiated paging. As defined in TS 38.331 section 5.3.2, the network initiates the paging procedure by transmitting the paging message at the UE's paging occasion (see e.g. TS 38.304). The network may address multiple UEs within a paging message by including one Paging Record for each UE.

The following exemplary paging message is defined in TS 38.331, section 6.2.2 thereof:
The *Paging* message is used for the notification of one or more UEs.

A UE does not need to monitor paging channels continuously though; a paging DRX (Discontinued Reception) function is defined where the UE in RRC_IDLE or RRC_INACTIVE is only required to monitor paging channels during one Paging Occasion (PO) per DRX cycle (see 3GPP TS 38.304, e.g. sections 6.1 and 7.1). The Paging DRX cycles (can also be called paging cycles) are configured by the network.

The POs of a UE for CN-initiated and RAN-initiated paging are based on the same UE ID, resulting in overlapping POs for both. The number of POs in a paging frame (PF) is configurable via system information, and a network may distribute UEs to those POs based on their IDs (e.g. the UE_ID below). A PO is a set of PDCCH monitoring occasions and can consist of multiple time slots (e.g. subframe or OFDM symbol) where the paging DCI can be sent. One PF is one radio frame and may contain one or multiple PO(s) or starting point of a PO.

According to an exemplary 5G-compliant solution, the 3GPP technical standard 38.304 defines in section 7.1 the PF and PO for paging, using the following formulae, where SFN is the abbreviation for the system frame number:

SFN for the PF is determined by:

$$(SFN + PF\_offset) \bmod T = (T \operatorname{div} N)*(UE\_ID \bmod N)$$

Index (i_s), indicating the index of the PO is determined by:

$$i\_s = floor\ (UE\_ID/N)\ mod\ Ns$$

The following parameters are used for the calculation of PF and i_s above:

T: DRX cycle of the UE (T is determined by the shortest of the UE specific DRX value(s), if configured by RRC and/or upper layers, and a default DRX value broadcast in system information. In RRC_IDLE state, if UE specific DRX is not configured by upper layers, the default value is applied).

N: number of total paging frames in T

Ns: number of paging occasions for a PF

PF_offset: offset used for PF determination

UE_ID: 5G-S-TMSI mod 1024

**Fig. 7** illustrates a simplified and exemplary paging procedure, particularly the messages exchanged between the base station and a UE. In particular, it is exemplarily assumed that the configuration of the paging procedure at the UE is provided by the base station. For instance, this configuration information provided by the base station could assist in defining the paging frame and paging occasion(s) of the UE. According to this paging configuration, the UE monitors the paging PDCCH (e.g. also called paging DCI) in its paging frame and paging occasions so as to try receiving the paging PDCCH based on its P-RNTI. If the CRC check (based on the P-RNTI) is correct (i.e. paging PDCCH is addressed to the P-RNTI), the UE receives the scheduled paging message (transmitted on the PDSCH). Then, the UE needs to search for its own paging record in the received paging message.

When the UE receives a paging message, the PDCCH monitoring can be stopped by the UE. Depending on the paging cause, the UE may continue with e.g. obtaining system information, or establishing the RRC connection with the base station and then receiving the data (traffic/instruction) from the network.

*NR System Information Acquisition*

An exemplary implementation of the system information acquisition function in 5G NR that involves PDCCH monitoring, already mentioned briefly above, according to the currently standardized version, will be explained in a simplified and abbreviated form in the following.

In 5G NR, system information (SI) is divided into the MIB (Master Information Block) and a number of SIBs (System Information Blocks) (see 3GPP TS 38.331 v16.2.0 e.g. section 5.2, see also 3GPP TS 38.300 v16.4.0 e.g. section 7.3, and also 3GPP TS 38.213 v16.3.0 e.g. section 13). The *MIB* is transmitted on the BCH and includes parameters that are needed to acquire the SIB1 from the cell. The SIB1 is periodically transmitted on the DL-SCH and includes information regarding the availability and scheduling, e.g. mapping of SIBs to SI messages, periodicity, SI-window size of other SIBs with an indication whether one or more SIBs are only provided on demand, and in that case, the configuration needed by the UE to perform the SI request.

SIBs other than SIB1 are carried in System Information messages (SI messages), which are transmitted on the DL-SCH. SIBs having the same periodicity can be mapped to the same SI message. Each SI message is transmitted within periodically occurring time-domain windows (referred to as SI-windows with the same length for all SI messages). Each SI message is associated with an SI-window, and the SI-windows of different SI messages do not overlap.

The UE applies the SI acquisition procedure to acquire the information of the Access Stratum (AS) and Non-Access stratum (NAS), and applies to UEs in RRC_IDLE, in RRC_INACTIVE, and in RRC_CONNECTED modes. For instance, the UE may apply the SI acquisition procedure upon cell selection (e.g. upon power-on), cell-reselection, return from out of coverage, after reconfiguration with sync completion, after entering the network from another RAT (Radio Access Technology), upon receiving an indication that the system information has changed (SI change indication), and when the UE does not have a valid version of a stored SIB.

A modification period is used, i.e. updated SI is broadcast in the modification period following the one where the SI change indication is transmitted. The modification period length can be defined by multiplying the default paging cycle (e.g. 230/640/1280/2560ms) with a corresponding coefficient (modificationPeriodCoeff: 2/4/8/16), modification period = defaultPagingCycle x modificationPeriodCoeff.

The modification period boundaries are defined by SFN values for which SFN mod m = 0, where m is the number of radio frames comprising the modification period. The modification period is configured by system information. The UE receives indications about SI modifications and/or PWS notifications using Short Message transmitted with P-RNTI over DCI (see clause 6.5).

The UE receives indications about the SI modifications in a Short Message transmitted with the P-RNTI over DCI, e.g. as defined in TS 38.331:

**Table 6.5-1: Short Messages**

| Bit | Short Message |
|---|---|
| 1 | ***systemInfoModification***<br>If set to 1: indication of a BCCH modification other than SIB6, SIB7 and SIB8. |
| 2 | ***etwsAndCmasIndication***<br>If set to 1: indication of an ETWS primary notification and/or an ETWS secondary notification and/or a CMAS notification. |
| 3 | ***stopPagingMonitoring***<br>This bit can be used for only operation with shared spectrum channel access and if *nrofPDCCH-MonitoringOccasionPerSSB-InPO* is present. If set to 1: indication that the UE may stop monitoring PDCCH occasion(s) for paging in this Paging Occasion as specified in TS 38.304 [20], clause 7.1. |
| 4-8 | Not used in this release of the specification, and shall be ignored by UE if received. |

UEs in RRC_IDLE or in RRC_INACTIVE may monitor for an SI change indication in its own paging occasion every DRX cycle (see TS 38.331 section 5.2.2.2.2). UEs in RRC_CONNECTED shall monitor for an SI change indication in any paging occasion at least once per modification period if the UE is provided with common search space on the active BWP to monitor paging.

For SI message acquisition one or more PDCCH monitoring occasions are determined, which can be the same or different than for PDCCH monitoring of SIB1. For instance, the UE assumes that, in the SI window, PDCCH for an SI message is transmitted in at least one PDCCH monitoring occasion corresponding to each transmitted SSB (Synchronization Signal Block). The SIB1 configuration provides information about the search space and other PDCCH-related parameters that a UE needs in order to monitor for scheduling of the SIB1.

To summarize the above within the context of the improved concepts and aspects for the paging procedure as will be explained later, the system information acquisition function involves that the UE monitors the PDCCH (e.g. during any one of the paging occasions) to be able to detect a SI change indication and to subsequently receive the updated system information in the next modification period.

*Further Improvements*

3GPP is constantly looking for further possibilities for the UE to save power. An objective for power saving enhancement in Rel. 17 is directed to the study of paging enhancements to reduce unnecessary UE paging receptions, (if possible with no impact to legacy UEs), e.g. for idle/inactive UEs but also for UEs in connected mode.

The paging procedure is performed by UEs in the idle state, the inactive state as well as the connected state. Paging consumes relatively significant power for NR UEs in RRC idle state and RRC inactive states, while consuming relatively less power for UEs in the connected state.

Thus, optimizations of paging may save a large portion of the UE power consumption.

For instance, the introduction of a paging early indication before a target paging occasion (PO) is discussed as a candidate for paging enhancements in 3GPP. The paging early indication, PEI, can be used to indicate to the UE whether to monitor the PDCCH scrambled with the P-RNTI (e.g. termed in the following paging DCI) at the next PO. For example, the PEI can be implemented such that it can indicate to the UE that the UE should monitor for the paging DCI at the next PO, or it can indicate to the UE that monitoring for the paging DCI is not required. The PEI can take respectively different values to instruct the UE whether to monitor for the paging DCI at the next PO or not. Other candidates for paging enhancements, not further discussed in the following, are sub-grouping for paging and cross-slot scheduling for paging PDSCH.

Potential indication methods for the PEI include:

• DCI-based indication, e.g. based on

   ◦ Extending existing DCI format 1_0 or 2_6

◦ New DCI format

• Reference-signal-based or sequence-based indication, e.g. based on TRS/CSI-RS or SSS (Secondary Synchronization Signal)

No final agreements for the PEI have been reached yet. The UE and gNB behavior for the paging procedure that makes use of the PEI is thus presently undefined.

The inventors have identified the above-discussed potential drawbacks and challenges. The inventors have thus identified the possibility of providing an improved paging procedure that allows avoiding or mitigating one or more of the above-identified problems. The present invention relates to different solutions and variants for such an improved paging procedure.

*Embodiments*

In the following, UEs, base stations, and procedures to meet these needs will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes that should not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology, but should be more broadly understood in terms of functions and concepts that underlie the functioning and principles of the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

The expression **"not required",** for instance used in "monitoring for receiving a paging DCI is not required" can be exemplarily understood as allowing the UE to skip the monitoring for receiving a paging DCI, rather than expressly prohibiting the UE to do so. Thus, in other words, typically the UE will not monitor for receiving a paging DCI, following the improved paging procedure, when the UE is not required to so, e.g. thereby saving power.

The term **"monitoring"** can be broadly understood as trying to decode a possible candidate for receiving a DCI message, e.g. based on a particular format, or put more simply as trying to decode a DCI message. Such a decoding attempt can also be called blind decoding. A DCI message can be broadly understood e.g. as a resource assignment message for uplink or downlink radio resources, such as a paging DCI that indicates radio resources where a paging message is transmitted in the downlink. Correspondingly, the term **"monitoring function"** can be broadly understood in this context as relating to the corresponding function performed by the UE for trying to decode a DCI message.

The terms **"reliable"** and **"not reliable"** are used in the present specification in connection with the detection of the paging early indication in the UE. It is for example to be understood as a property or evaluation of the PEI detection from the UE perspective. In the different solutions presented herein for the improved paging procedure, the PEI detection can be assumed to be unreliable for several reasons, such as that the PEI resource (at which the UE tries to detect the PEI) is within a SI modification period or within a modification period of one or more downlink reference signals. Whether the PEI detection is reliable or not need not be determined as such by the UE, e.g. in the sense that the UE obtains an actual result of reliable or non-reliable or a level of reliability or similar. The UE may rather directly determine whether a condition or criterion is true that would result in the PEI detection being considered reliable or non-reliable, such as the PEI resource (at which the UE tries to detect the PEI) being within a SI modification period or not. Details thereof will be presented in the various solutions explained below. Other terms that can be equally used to characterize the PEI detection at the UE are **"certain"** and **"uncertain"**.

The terms **"Transmission"** and **"non-transmission"** of a reference signal refer to whether or not this reference signal was indeed transmitted by the gNB or not. From the UE perspective, other terms that can be used instead are **"available"** and **"not available"** or generally **"availability",** such as in the context that the UE can be informed by the gNB whether the reference signal is available or not available for the UE to be received and processed.

For the following solutions it is exemplarily assumed that the improved paging procedure is conceptually based on the paging procedure as defined according to 3GPP 4G or 5G standards. For instance, in line with the general illustration in Fig. 7, such a paging procedure would involve the transmission/reception of the paging DCI on the downlink control channel (such as the PDCCH) and the subsequent transmission/reception of the paging message on the downlink shared channel (PDSCH), wherein the paging message is transmitted/received in accordance with the information provided by the paging DCI. Generally, it is also assumed that the improved paging procedure can be performed by the UE in the idle mode, the inactive mode or the connected mode.

Fig. 8 illustrates a general, simplified and exemplary block diagram of a user equipment (also termed communication device) and a scheduling device (here exemplarily assumed to be located in the base station, e.g. the eLTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of an improved paging procedure will be described in the following. In said connection, improved UEs and improved base stations are presented, which participate in the improved paging procedure. Corresponding methods for the UE behavior and the base station behavior are provided as well.

According to one possible solution, the UE will try to detect the PEI at the corresponding time/frequency resource (called e.g. PEI resource), and will then proceed to determine whether or not to perform monitoring at the next subsequent paging occasion that corresponds to that PEI resource. In case the UE detects the PEI transmitted by the gNB, the UE can follow its content as to whether monitoring of the paging DCI is indicated or not. As mentioned above, presently the UE behavior is not defined, such that it is unclear what the UE should do if the UE fails to detect the PEI at the PEI resource.

According to a first variant of this solution, in case the UE fails to detect the PEI at the corresponding PEI resource, the UE shall continue to monitor for paging. This would have the advantage that even if the PEI is mis-detected as not being present although it was transmitted by the gNB, the UE would continue monitoring for paging and would indeed receive the paging DCI. However, this solution would result in a higher power consumption at the UE, especially compared with the case where the UE skips paging monitoring when no PEI is detected as explained in the other variant. Further, there is more network overhead, because the gNB has to transmit the PEI even when there is no paging.

According to another second variant of this solution, in case the UE fails to detect the PEI at the corresponding PEI resource, the UE shall not continue to monitor for paging. This would have the benefit that the power consumption is indeed lowered at the UE, because the UE is not required to monitor for paging, e.g. determine whether a paging DCI is received. The paging monitoring at the UE can be controlled by the gNB, by using the PEI. Furthermore, there is less network overhead, because the gNB can choose not to send PEI if there is no paging. On the other hand, in this solution there is the risk that the PEI was indeed transmitted, but the UE mis-detected it as being not present. The UE would thus not monitor for the subsequent paging DCI and would miss the paging. As a result, the paging reliability is low, and the paging latency as well as the network overhead may be increased, because there is the need for a subsequent paging, including the transmission of another PEI and a paging DCI and a paging message.

As presented above, the two solutions have respective disadvantages. For instance, the second variant offers opportunities to save power, but does not take into account the case where the UE erroneously detects the PEI as missing although the PEI was in fact transmitted by the gNB.

Thus, the inventors have identified the possibility of providing a further improved paging procedure that allows avoiding or mitigating one or more of the above-identified problems. In the following, further improved solutions for a paging procedure will be presented.

According to this further improved paging procedure, the PEI detection at the UE side is differentiated between being reliable or not reliable. This differentiation is then used in the case where the PEI was not detected by the UE at the monitored PEI resource (e.g. called no-PEI detection). In principle, a no-PEI detection that is assumed to not be reliable will not be trusted by the UE, such that, even if the PEI is not detected by the UE, the UE proceeds to monitor for the paging DCI at the subsequent PO (with which the PEI resource is associated).

**Fig. 9** illustrates a simplified and exemplary UE structure according to one exemplary solution of the improved paging procedure, and which can be implemented based on the general UE structure explained in connection with Fig. 8. The various structural elements of the UE illustrated in said Fig. 9 can be interconnected between one another e.g. with corresponding input/output nodes (not shown) e.g. in order to exchange control and user data and other signals. Although not shown for illustration purposes, the UE may include further structural elements.

As apparent from Fig. 9, the UE may include a paging function operation circuitry, which in turn includes the functions of paging DCI monitoring and reception as well as the paging early indication detection and reception.

In the present case as will become apparent from the below disclosure, the receiver of the UE can thus be exemplarily configured to at least partly perform one or more of monitoring for and receiving a paging DCI and detecting and receiving a paging early indication, receiving downlink reference signals, receiving system information, etc.

In the present case as will become apparent from the below disclosure, the processing circuitry of the UE can thus be exemplarily configured to at least partly perform one or more of operating a paging function, determining whether to monitor for receiving the paging DCI, determining whether different conditions are fulfilled in connection with the PEI detection reliability, etc.

In the present case as will become apparent from the below disclosure, the transmitter of the UE can thus be exemplarily configured to at least partly perform one or more of transmission procedures discussed below.

One exemplary solution as will be disclosed in more detail further below is implemented by a UE that includes the following. A processor of the UE operates a paging function that includes monitoring of a downlink control channel for receiving, from a radio base station, a paging downlink control information, DCI, at a paging occasion based on whether a paging early indication is detected at a preceding paging early indication resource monitored by the UE. In case the receiver does not detect the paging early indication at the monitored paging early indication resource,

the processor determines to monitor for receiving the paging DCI at the paging occasion subsequent to the monitored paging early indication resource, in case a paging early indication detection is not reliable,

the processor determines that monitoring for receiving the paging DCI at the paging occasion subsequent to the monitored paging early indication resource is not required, in case a paging early indication detection is reliable.

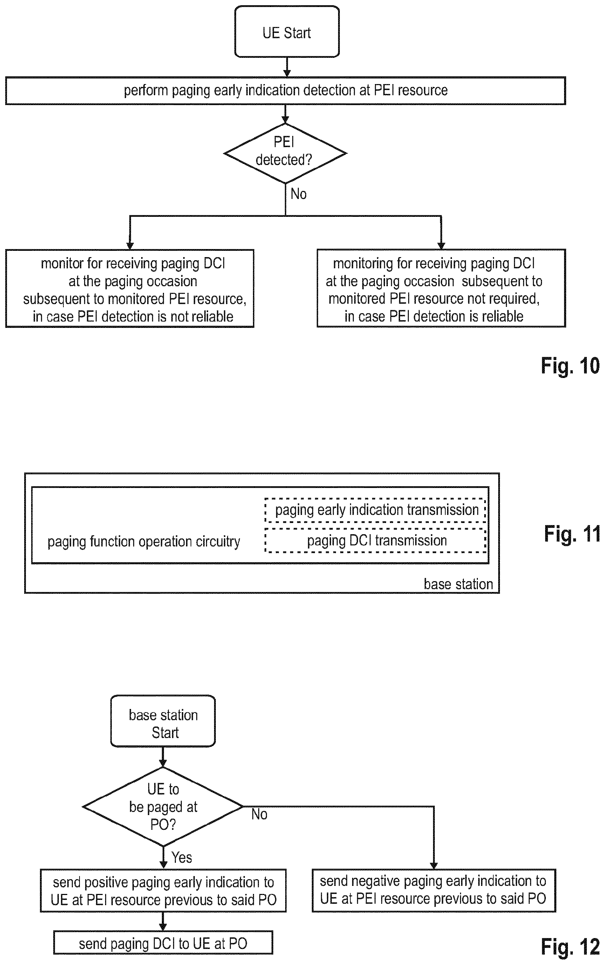

A corresponding sequence diagram for an exemplary UE behavior in line with the above-discussed UE is illustrated in **Fig. 10.** A corresponding method comprises the following steps performed by a UE:

operating a paging function that includes monitoring of a downlink control channel for receiving, from a radio base station, a paging downlink control information, DCI, at a paging occasion based on whether a paging early indication is detected at a preceding paging early indication resource monitored by the UE,

in case the paging early indication is not detected at the monitored paging early indication resource,

determining to monitor for receiving the paging DCI at the paging occasion subsequent to the monitored paging early indication resource, in case a paging early indication detection is not reliable,

determining that monitoring for receiving the paging DCI at the paging occasion subsequent to the monitored paging early indication resource is not required, in case a paging early indication detection is reliable.

The improved paging procedure is performed between the UE and the base station, to which the UE is currently connected (termed e.g. serving base station). Correspondingly, the improved paging procedure also provides a base station that participates in said improved paging procedure. The base station could include the following. A processor of the base station operates a paging function with a user equipment, wherein the paging function includes transmitting a paging early indication at a paging early indication resource to be monitored by the UE to indicate a subsequent paging. The paging function will further include the transmission of a paging DCI at a paging occasion monitored by the UE as well. The processor will determine that, in case the base station intends to page the UE (e.g. to transmit a paging DCI at a paging occasion so as to page the UE), the base station shall transmit a paging early indication at the corresponding PEI resource previous to said paging occasion that will be used to transmit the paging DCI. The paging early indication will indicate to the UE that there will be a subsequent paging DCI (such a PEI being called e.g. positive PEI). Subsequently, and in line with the positive PEI transmitted before, the base station can proceed to transmit the paging DCI at the paging occasion.

Due to the positive PEI transmitted before by the base station, the UE should be monitoring the paging occasion for the corresponding paging DCI and should thus be able to receive same.

In an exemplary implementation, in case the base station does not intend to page the UE, the base station can also transmit a paging early indication at the corresponding PEI resource previous to said paging occasion that will not be used to transmit the paging DCI. The transmitted paging early indication will indicate to the UE that there will be no subsequent paging DCI (such a PEI being called e.g. negative PEI).

Fig. 11 illustrates a simplified and exemplary base station structure according to one exemplary solution of the improved paging procedure, and which can be implemented based on the general base station structure explained in connection with Fig. 8. The various structural elements of the base station illustrated in said Fig. 11 can be interconnected between one another e.g. with corresponding input/output nodes (not shown) e.g. in order to exchange control and user data and other signals. Although not shown for illustration purposes, the base station may include further structural elements.

As apparent therefrom, the base station comprises a paging function operation circuitry, which in turn comprises the function of the paging early indication transmission and the paging DCI transmission as mentioned above.

A corresponding sequence diagram for an exemplary base station behavior in line with the above-discussed base station is illustrated in Fig. 12. A corresponding method comprises the following steps performed by the base station.

The base station determines whether a UE is to be paged at a suitable paging occasion. In the positive case, the base station can send a positive paging early indication to the UE at that suitable PEI resource previous to the paging occasion to be used. Then, the base station sends the paging DCI to the UE at that paging occasion after having sent the positive PEI.

In case the base station determines that the UE is not to be paged, the base station can e.g. decide to send a negative PEI to the UE, to inform the UE that no paging will occur at the next PO.

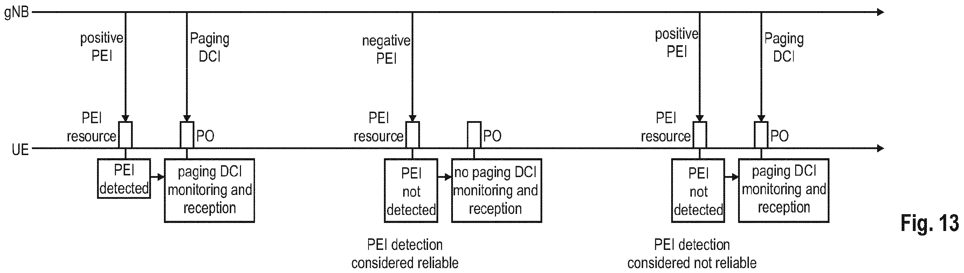

Fig. 13 illustrates a time line and an exemplary exchange between the gNB and the UE for the improved paging procedure. At the UE side, Fig. 13 illustrates the repeatedly occurring paging early indication resources and corresponding paging occasions. The UE is assumed to try to detect the PEI at the corresponding PEI resources. It is furthermore assumed exemplarily that the gNB will try to page the UE in the first and third paging occasions, and does not try to page the UE at the second illustrated paging occasion of Fig. 13.

In line with the improved paging procedure, the UE successfully detects the positive PEI (indicates UE should monitor for paging DCI) at the first illustrated PEI resource and as a result proceeds to monitor the subsequent paging occasion, thereby being able to receive the paging DCI. For the second paging time instance, the UE also monitors for the PEI, but fails to detect the negative PEI transmitted by the gNB. Furthermore, the PEI detection is considered to be reliable, and as a result the UE is assumed to not monitor the subsequent paging occasion for the paging DCI. Since the gNB did not use the second PO for paging, no paging DCI is sent at that second PO.

At the third paging time instance, the gNB transmits the positive PEI at the corresponding PEI resource, but the UE fails to detect same erroneously. However, the no-PEI detection is considered to not be reliable, and thus, the UE does not trust the no-PEI detection. Rather, the UE decides to nonetheless monitor for a paging DCI at that subsequent paging occasion, and is thus able to receive the paging DCI transmitted by the gNB at that paging occasion.

Correspondingly, the improved UE participates in the improved paging procedure so as to overcome the previously identified drawbacks not exclusively but particularly for scenarios where the UE is likely to mis-detect the presence of the PEI. Therefore, the improved paging procedure allows to avoid such cases where the PEI is mis-detected to not be present although it was in effect transmitted by the gNB and thus to avoid that the subsequent paging DCI and possibly the paging message are missed too by the UE (see third paging instance of Fig. 13).

As a result, the improved paging procedure allows a balance between allowing the UE to save power (by not monitoring for the paging DCI in case the PEI was not detected and the no-PEI detection can be assumed to be reliable) and increasing the paging reliability (by requiring the UE to monitor for the paging DCI even in case the PEI was not detected because the no-PEI detection is assumed to not be reliable). The UE thus is provided with the possibility to be paged by the gNB in such mis-detection scenarios, thereby increasing the paging reliability and reducing the data overhead and paging delay, because a further paging (including the transmission of the PEI, the paging DCI and the paging message) is not necessary.

There are several different implementations of the above described UE as well as different implementations of the base station that participate in the improved paging procedure.

In the following, different exemplary implementations of the improved paging procedure will be described, respectively providing information on how the UE can differentiate between a no-PEI detection being reliable or non-reliable so as to facilitate achieving the above discussed advantages.

The inventors have identified potential reasons why the UE will mis-detect the PEI as not being present at the PEI resource although the PEI was in fact transmitted by the gNB in said PEI resource.

One possible reason is that the configuration of the PEI is currently being or was changed by the gNB, such that there could be a mismatch between the PEI configuration being used by the UE to detect the PEI and the configuration used by the gNB to transmit the PEI.

Another reason is that there is the possibility that the time and/or frequency timing of the UE is not aligned with the gNB, and thus that the PEI detection might occur at the UE side at an unsynchronized (e.g. different) time and/or frequency than was used by the gNB to transmit the PEI. The time and/or frequency synchronization at the UE is typically performed based on one or more suitable reference signals transmitted in the downlink by the gNB for that purpose, such as the TRS or the CSI-RS exemplarily introduced before for a 5G 3GPP implementation.

The UE can not directly determine at which time or frequency the gNB indeed transmitted the PEI or which configuration or at which time or frequency the gNB indeed transmitted these downlink reference signal(s).

Rather, according to the improved paging procedure, the UE can try to analyze different conditions or criteria and determine on that basis, whether there is any indication that the no-PEI detection shall be considered not reliable, in which case the UE might further determine to not trust a no-PEI detection (PEI not detected) and thus to nonetheless proceed with monitoring for the paging DCI at the next corresponding paging occasion.

According to a first solution of the improved paging procedure, the reliability of the no-PEI detection is considered to depend on whether the monitored paging early indication resource occurs during a system information modification period, during which the UE is to monitor for modified system information. It can be exemplarily assumed that the PEI can be configured based on the system information, such that the system information modification period presents the possibility that the configuration of the PEI is changed by the gNB. It thus introduces the uncertainty of whether the configuration of the PEI as used by the UE during the SI modification period is still the same as the one used by the gNB for transmitting the PEI at the PEI resource.

The UE thus determines whether the monitored paging early indication resource occurs during a system information modification period, during which the UE is to monitor for modified system information including the change of the PEI configuration. Then, the paging early indication detection is assumed to not be reliable in case the UE determines that the monitored paging early indication resource occurs during the system information modification period.

On the other hand, in case the UE determines that the monitored paging early indication resource does not occur during the system information modification period, and assuming there are no other reasons to distrust the no-PEI detection (see e.g. other solutions, especially subsequent second, third and fourth solutions), the no-PEI detection could be assumed to be reliable.

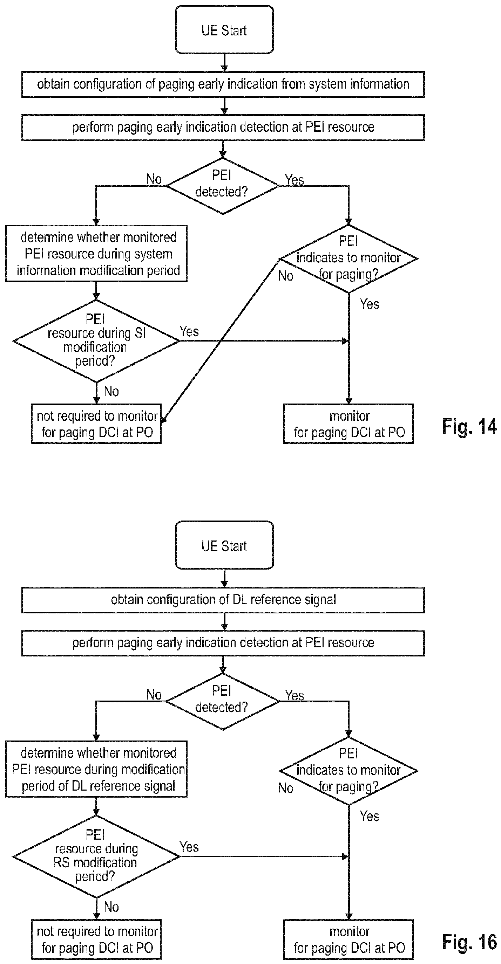

A corresponding sequence diagram for an exemplary UE behavior in line with the above-discussed first solution is illustrated in **Fig. 14.** The UE is exemplarily to be configured to obtain the PEI configuration from system information that is broadcast by the gNB in the radio cell in which the UE is located. In accordance with this PEI configuration, the UE then can perform the PEI detection at the PEI resource. If the PEI is detected by the UE, the UE can follow the indication of the received PEI. For instance, the UE processes the received PEI and determines whether the PEO indicates the UE to monitor for the paging DCI or that monitoring is not required. In case the PEI indicates that the UE should monitor for the paging, the UE can proceed to monitor for the paging DCI at the PO subsequent to that PEI resource. Conversely, in case the PEI indicates that the UE does not need to monitor for the paging, the UE can skip the monitoring.

On the other hand, in case the PEI is not detected, the UE needs to obtain further information relevant for the no-PEI detection, and in the case of the first solution, the UE determines whether the monitored PEI resource is during the system information modification period. If the UE determines that the PEI resource is during the SI modification period, the UE proceeds to monitor for the paging DCI at the PO subsequent to that PEI resource. On the other hand, in case the UE determines that the PEI resource is not during the SI modification period, the UE determines that monitoring for the paging DCI at the subsequent PO is not required, and the UE thus may e.g. skip the monitoring.

In line with Fig. 14, the no-PEI detection during a SI modification period is considered to not be reliable, and thus, even when the PEI is not detected, the UE behavior is cautious and involves the paging DCI monitoring nonetheless.

As presented above, the first solution relies on whether or not the PEI resource occurs during or outside a system information modification period. It was not explained in detail however how such a system information modification period can be implemented. Correspondingly, in the following, an exemplary variant of this first solution will be explained, where an implementation of a system information modification period is presented. In particular, it is assumed that the period of time during which modified system information is transmitted from the gNB to the UE is announced by a system information change indication transmitted from the gNB to the UE. This SI change indication can be transmitted for example during a paging occasion monitored by the UE. The system information modification period may begin after this system information change indication is received by the UE, e.g. directly after the SI change indication or after a time delay. The length of the system information modification period is agreed between the UE and the gNB and can be e.g. a specific number of radio frames. Therefore, the end of the system information modification period can be the end of the radio frame that is the known number of radio frames after that radio frame in which the system information change indication is received by the UE.

According to a further exemplary implementation of the variant of the first solution, the system information acquisition procedure as presented above for the 5G 3GPP communication systems can be used in the first solution, including details on the system information notification period according to this 5G 3GPP implementation. For instance, the modification period end boundary is defined by the SFN value for which SFN mod m = 0, where m is the number of radio frames comprising the modification period.

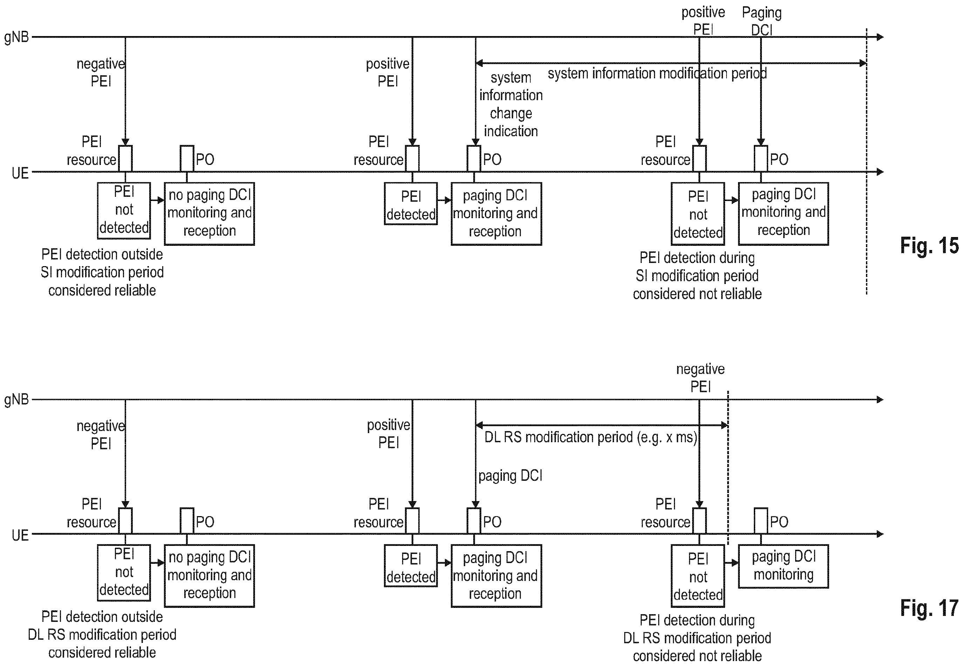

**Fig. 15** illustrates a time line and an exemplary exchange between the gNB and the UE for the improved paging procedure according to this first solution, in a similar manner as done in Fig. 13. Fig. 15 illustrates the system information modification period, and the underlying improved paging procedure exemplarily assumes that the system information modification period is started with a system information change indication received at a PO, as introduced in the above-discussed variant of the first solution.

Correspondingly, the no-PEI detection results in a different paging monitoring depending on whether the no-PEI detection occurs outside or within the SI modification period. In the first paging instance, it is assumed that the gNB transmits a negative PEI. The UE in any case is not able to detect the negative PEI. Because this first no-PEI detection occurs outside the SI modification period, the UE proceeds to not monitor for (and does not receive) the paging DCI at the subsequent PO. The no-PEI detection was considered reliable, and the no-PEI detection result was thus trusted by the UE.

The second paging opportunity is used by the gNB to transmit a system information change indication, including the preceding transmission of the positive PEI. Correspondingly, the UE correctly detects the positive PEI, follows the corresponding instruction carried by the positive PEI and thus proceeds to monitor for and achieves to receive the paging DCI transmitted by the gNB at the subsequent paging occasion. The SI modification period is assumed to start at the time the SI change indication is received and is long enough to cover the third paging instance illustrated in Fig. 15.

In the exemplary scenario of Fig. 15, it is assumed that the gNB tries to page the UE at the third paging instance, such that a positive PEI and a paging DCI are transmitted to the UE by the gNB. However, the PEI is erroneously not detected by the UE, e.g. because the gNB uses a different PEI configuration than the one used by the UE and which is now provided to the UE during the system information modification period. Differently than for the first paging occasion of Fig. 15, the UE proceeds to monitor for the paging DCI at the next PO and thus receives the paging DCI. Since the no-PEI detection occurs during the SI modification period, the no-PEI detection and particularly the no-PEI detection result are not considered reliable by the UE.

This first solution has the advantage that the UE can still receive the paging DCI although it did not detect the PEI, as was already explained above. Furthermore, the determination at the UE to differentiate between a reliable and non-reliable no-PEI detection is simple as well as deterministic.

According to a second solution of the improved paging procedure, the reliability of the no-PEI detection is considered to depend on whether the monitored PEI resource occurs during a modification period of one or more downlink reference signals, during which the UE is to monitor for a change of a configuration of the one or more downlink reference signals. These reference signals are usable by the UE to determine one or more of the time synchronization and frequency synchronization with the gNB. According to a further exemplary implementation of the second solution, the reference signals could be the Tracking Reference Signal, TRS, or the Channel State Information Reference Signal, CSI-RS, as presented above for the 5G 3GPP communication systems.

Conceptually similar to the first solution discussed above, it is assumed for the second solution that the configuration of these DL reference signals can be changed during a modification period (e.g. called RS modification period), during which the UE is to monitor for a change of a configuration of these DL reference signals. Thus, during this RS modification period, there is an uncertainty of whether the configuration of the DL reference signals at the UE side (receiving side) and the gNB (sending side) is still the same. If the RS configuration would not be the same, the UE may encounter problems in correctly detecting (or receiving) the DL reference signals, and thus the UE may not be properly synchronized with the gNB in the time and/or frequency. This also influences the PEI detection, in the sense that a UE being unsynchronized with the gNB in the time and/or frequency domain is more likely to mis-detect the PEI (e.g. fail to detect the PEI although it was transmitted by the gNB).

Therefore, for the purpose of improving the paging procedure, the UE determines whether the monitored PEI resource occurs during the RS modification period. The paging early indication detection is assumed to not be reliable in case the monitored paging early indication resource occurs during the RS modification period.

On the other hand, in case the UE determines that the monitored PEI resource does not occur during the RS modification period, and assuming that there are no other reasons to distrust the no-PEI detection (see e.g. other solutions, especially, the first, third and fourth solutions), the no-PEI detection could be assumed to be reliable.

A corresponding sequence diagram for an exemplary UE behavior in line with the above-discussed second solution is illustrated in **Fig. 16**. The UE is exemplarily assumed to be configured to obtain the configuration of the DL reference signals from the gNB. Although not illustrated in Fig. 16, the UE, in accordance with the received DL reference signal configuration, can perform time and/or frequency synchronization with the gNB.

The PEI detection is performed by the UE at a configured PEI resource. If the PEI is detected by the UE, the UE can follow the indication of the received PEI. For instance, the UE processes the received PEI and determines whether the PEO indicates the UE to monitor for the paging DCI or that monitoring is not required. In case the PEI indicates that the UE should monitor for the paging, the UE can proceed to monitor for the paging DCI at the PO subsequent to that PEI resource. Conversely, in case the PEI indicates that the UE does not need to monitor for the paging, the UE can skip the monitoring.

On the other hand, in case the PEI is not detected, the UE needs to obtain further information relevant for the no-PEI detection, and in the case of the second solution, the UE determines whether the monitored PEI resource is during the modification period of the reference signal configuration. If the UE determines that the PEI resource is during the RS modification period, the UE proceeds to monitor for the paging DCI at the PO subsequent to that PEI resource. On the other hand, in case the UE determines that the PEI resource is not during the RS modification period, the UE determines that monitoring for the paging DCI at the subsequent PO is not required, and the UE thus may e.g. skip the monitoring.

In line with Fig. 16, the no-PEI detection during a RS modification period is considered to not be reliable, and thus, even when the PEI is not detected, the UE behavior is cautious and involves the paging DCI monitoring nonetheless.

According to one variant of this second solution, the configuration of the reference signal can be changed by system information that is broadcast by the UE in its radio cell. Therefore, the above-introduced RS modification period is the system information modification period, already known from the first solution. The resulting determination performed by the UE can thus be the same as for the first solution, namely whether the monitored PEI resource occurs during the SI modification period, during which also the reference signal configuration could be changed.

According to a further variant of this second solution, instead or additionally to the system information, the configuration of the reference signal can be changed differently, e.g. based on a paging downlink control information, DCI, message transmitted by the gNB and a subsequent paging message (e.g. of the RRC protocol) that carries the changed RS configuration. In that case, the above-introduced RS modification period starts with the reception of a paging DCI and e.g. ends after a preconfigured number of ms, e.g. several or tens of ms during which the UE expects to receive the paging message.

When assuming that the RS modification period is the SI modification period discussed in detail in the first solution, the time lime and exemplary exchange between the gNB and the UE illustrated in Fig. 15 for the first solution is equally considered representative for this system-information-based second solution of the improved paging procedure. Also in accordance with the second solution, the no-PEI detection is differentiated based on whether it occurs during the SI modification period, thereby resulting in different UE behavior at the first paging instance of Fig. 15 (where the no-PEI detection is considered reliable and thus monitoring of paging DCI is skipped) and the third paging instance of Fig. 15 (where the no-PEI detection is considered not reliable and thus monitoring of paging DCI is performed).

**Fig. 17** is directed to the case, where the RS configuration is changed based on a different mechanism than system information, e.g. based on a paging DCI and paging message, as described above. **Fig. 17** illustrates a time line and an exemplary exchange between the gNB and the UE for the improved paging procedure according to this second solution, in a similar manner as done in Fig. 13 and 15. Fig. 17 illustrates the RS modification period, and the underlying improved paging procedure exemplarily assumes that the RS modification period starts with the reception of a paging DCI and e.g. ends after a preconfigured number of ms (illustrated as x ms), e.g. several or tens of ms. As presented in Fig. 17, the paging DCI is received by the UE in a PO that is preceded by a positive PEI, which the UE is able to detect. Fig. 17 does not illustrate the paging message transmitted by the gNB to the UE in accordance with the paging DCI (e.g. the scheduled radio resources), for sake of simplicity. On the other hand, Fig. 17 illustrates how the next PEI resource occurs during the DL RS modification period. Thus, when assuming that the UE is not able to detect the PEI at that PEI resource (here exemplarily assumed to be a negative PEI), the UE proceeds to monitor for the paging DCI, because the no-PEI detection is considered unreliable during the DL RS modification period.

This second solution has also the advantage that the UE can still receive the paging DCI although it did not detect the PEI, as was already explained above. Furthermore, the determination at the UE to differentiate between a reliable and non-reliable no-PEI detection is simple as well as deterministic.

According to a third solution of the improved paging procedure, the reliability of the PEI detection is considered to depend on a particular configuration of one or more downlink reference signals. These downlink reference signals can be the same as the ones discussed for the second solution, e.g. the one or more DL reference signals that are usable by the UE to determine one or more of the time synchronization and frequency synchronization with the gNB and in one exemplary implementation could be the TRS or the CSI-RS as presented above for the 5G 3GPP communication systems.

These DL reference signals are typically transmitted at the configured occasions to the UE. However, the gNB might not transmit these DL reference signals at every RS transmission occasion. Rather, the gNB may decide to skip transmitting these DL reference signals, because e.g. the gNB is already heavily loaded or because the gNB wants to reduce interference.

According to one option, the transmission or non-transmission of the DL reference signals by the gNB is always informed by the gNB to the UE(s). In this option, in case the gNB decides to no longer transmit or to again start transmitting the DL reference signals to the UE, it shall inform the UE about this change. As a result, from the perspective of the UE, the UE would know at all times whether the DL reference signals are available or not available for being received and being processed, e.g. for the time and/or frequency synchronization. The DL reference signals are thus considered reliable. Therefore, even in case the DL reference signals are not detected and cannot be used by the UE for the time and/or frequency synchronization, the UE knows the reason, namely that the DL reference signals simply have not been transmitted by the gNB. The corresponding time and/or frequency synchronization is therefore considered reliable too by the UE.

There are several possibilities on how the gNB can keep the UE informed on whether or not the DL reference signals are being transmitted. One possibility is to use a paging DCI message that includes a suitable indication in said respect. Another possibility is the use of an RRC message to carry the information, which can be transmitted as a paging message on the PDSCH as announced by the paging DCI.

According to another converse option, the transmission or non-transmission of the DL reference signals by the gNB is not always informed by the gNB to the UE(s). In this option, in case the gNB decides to no longer transmit or to again start transmitting the DL reference signals to the UE, the gNB can, but need not (e.g. does not guarantee to), inform the UEs about the transmission status change of the DL reference signals. As a result, there is uncertainty from the perspective of the UE in connection with the availability of the DL reference signals and thus in connection with the current time and/or frequency synchronization with the gNB. The UE would have to blind-detect the DL reference signal, without knowing for sure its presence. This is particularly problematic for the case where the DL reference signals are not properly detected by the UE, such that the UE is uncertain whether the time and/or frequency synchronization is already so much off that a proper detection of the DL reference signals is no longer possible or whether the DL reference signals simply have not been transmitted by the gNB.

According to one optional implementation, whether or not the availability of the DL reference signals is always informed by the gNB the UE can be e.g. fixed from the very beginning (e.g. by being specified in a 3GPP standard or specified by an operator e.g. in a SIM, Subscriber Identity Module, card or SIM configuration). Another implementation would allow a configurability in that whether or not the transmission or non-transmission of the one or more DL reference signals by the gNB to the UE is always informed to the UE is configurable e.g. by the gNB. For instance, the configuration could be changed by system information or a dedicated message transmitted by the gNB to the UE.

Consequently, the two options discussed above influence the reliability of the no-PEI detection at the UE side according to the improved paging procedure.

In a simple solution, and exemplarily assuming that there are no other reasons to distrust the no-PEI detection (see e.g. other solutions, especially, the first, second and fourth solutions), the no-PEI detection can be considered reliable in case the UE is always informed by the gNB on the transmission or non-transmission of the DL reference signals (i.e. the availability of the DL reference signals at the UE side). In particular, the UE can trust its own time and/or frequency synchronization with the gNB, because it assumes that the previous time and/or frequency synchronization is still correct.

On the other hand, the no-PEI detection can be considered to not be reliable in case the UE is not always informed by the gNB on the transmission or non-transmission of the DL reference signals (i.e. the availability of the DL reference signals at the UE side). In particular, the UE does not trust the DL reference signal availability and thus its own time and/or frequency synchronization with the gNB, because there is the possibility that the gNB changes its transmission behavior of the DL reference signals (either from "transmitting the DL reference signals" to "not transmitting the DL reference signals", or vice versa) without informing the UE.

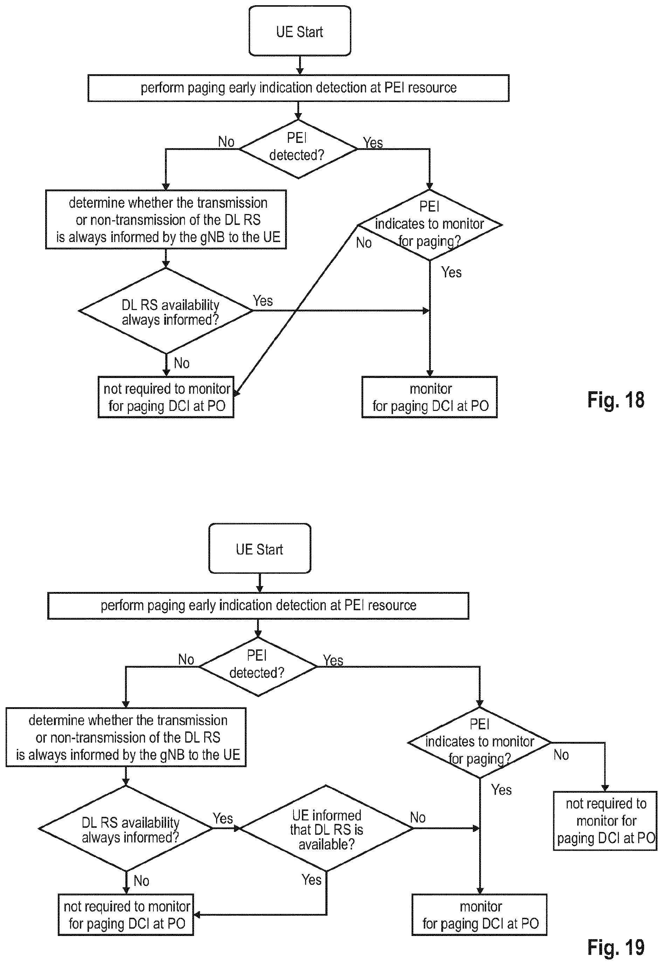

Thus, according to the third solution, the UE performs a determination as to whether or not the transmission or non-transmission of one or more downlink reference signals is always informed to the UE by the gNB. An example of the corresponding UE behavior in line with this third solution is presented in **Fig. 18,** which illustrates such a determination and the resulting different behavior at the UE in connection with the no-PEI detection.

As apparent from Fig. 18, the PEI detection is performed by the UE at the configured PEI resource. If the PEI is detected by the UE, the UE can follow the indication of the received PEI. For instance, the UE processes the received PEI and determines whether the PEO indicates the UE to monitor for the paging DCI or that monitoring is not required. In case the PEI indicates that the UE should monitor for the paging, the UE can proceed to monitor for the paging DCI at the PO subsequent to that PEI resource. Conversely, in case the PEI indicates that the UE does not need to monitor for the paging, the UE can skip the monitoring.

On the other hand, in case the PEI is not detected, the UE needs to obtain further information relevant for the no-PEI detection, and in the case of the third solution, the UE determines whether or not the transmission or non-transmission (e.g. termed availability from UE perspective) of one or more downlink reference signals is always informed to the UE by the gNB. In case the UE determines that the DL reference signal availability is always informed, the UE proceeds to monitor for the paging DCI at the PO subsequent to that PEI resource. On the other hand, in case the UE determines that the DL reference signal availability is not always informed, the UE determines that monitoring for the paging DCI at the subsequent PO is not required, and the UE thus may e.g. skip the monitoring.

In line with Fig. 18, the no-PEI detection in case the DL RS availability is not always informed is considered to not be reliable, and thus, even when the PEI is not detected, the UE behavior is cautious and involves the paging DCI monitoring nonetheless.

This third solution has the advantage that the UE can still receive the paging DCI although it did not detect the PEI, as was already explained above. Furthermore, the determination at the UE to differentiate between a reliable and non-reliable no-PEI detection is simple as well as deterministic.

A fourth solution of the improved paging procedure is a variation of the above-discussed third solution. The fourth solution makes an additional distinction for the case that the availability of the DL reference signals is always informed by the gNB to the UE, and distinguishes whether the UE is informed by the gNB that the DL resource signals are transmitted or are not transmitted. In case the UE determines that the gNB informed the UE that the DL reference signals are available (i.e. are transmitted by the gNB), the UE determines that monitoring for the paging DCI at the subsequent PO is not required, and the UE thus may e.g. skip the monitoring. On the other hand, in case the UE determines that the gNB informed the UE that the DL reference signals are not available (i.e. are not transmitted by the gNB), the UE proceeds to monitor for the paging DCI at the PO subsequent to that PEI resource.

In line with the above, the no-PEI detection is considered to not be reliable in case the transmission or non-transmission of the DL reference signals is always informed by the gNB to the UE and the gNB informs the UE that the DL reference signals are not transmitted by the gNB.

In a simple solution, and exemplarily assuming that there are no other reasons to distrust the no-PEI detection (see e.g. other solutions, especially, the first and second solutions), the no-PEI detection can be considered reliable, in case the transmission or non-transmission of the DL reference signals is always informed by the gNB to the UE and the gNB informs the UE that the DL reference signals are transmitted by the gNB.

An example of the corresponding UE behavior in line with this fourth solution is presented in **Fig. 19,** which illustrates the additional determination and the resulting different behavior at the UE in connection with the no-PEI detection. In comparison to the exemplary UE behavior illustration of Fig. 18 of the third solution, Fig. 19 additionally illustrates a determination as to whether "UE [is] informed that DL RS is available?". In the negative case ("No"), e.g. the UE is informed that the DL reference signals are not available according to the DL RS configuration, the UE may proceed to monitor for the paging DCI in the paging occasion subsequent to that PEI resource, because the UE does not trust the no-PEI detection. In the positive case ("Yes"), e.g. the UE is informed that the DL reference signals are available according to the DL RS configuration, the UE determines that monitoring for the paging DCI at the subsequent PO is not required, and the UE thus may e.g. skip the monitoring.

This fourth solution has also the advantage that the UE can still receive the paging DCI although it did not detect the PEI, as was already explained above. Furthermore, the determination at the UE to differentiate between a reliable and non-reliable no-PEI detection is simple as well as deterministic.

The four solutions described above respectively present criteria for the UE to distinguish between a reliable and a non-reliable no-PEI detection, so as to adapt the UE behavior for the improved paging procedure in case a PEI is not detected. The criteria of the four solutions can be considered standalone and separately from one another, as presented above.

The first solution is based on a first criterion, which is whether or not the monitored PEI resource occurs during an SI modification period; the second solution is based on a second criterion, which is whether the monitored PEI resource occurs during a modification period of the one or more downlink reference signals; the third solution provides a third criterion, which is whether or not the UE is always informed by the gNB on the transmission or non-transmission of the DL reference signals; and the fourth solution provides a fourth criterion, which is an additional distinction for the case that the availability of the DL reference signals is always informed by the gNB to the UE (see above third criterion), and that distinguishes whether the UE is informed by the gNB that the DL resource signals are transmitted or are not transmitted.

According to different variants of a fifth solution, two or more of any of the above criteria can be combined to identify a non-reliable PEI detection, wherein if any one of the combined criteria identifies an unreliable no-PEI detection, the UE distrusts the no-PEI detection because it is considered unreliable, and the UE thus proceeds to monitor for the paging DCI despite the missing PEI. The following example criteria combinations of this fifth solution are merely for illustration purposes, but should not limit the possible criteria combinations to these examples. Rather, any combination of the above four criteria can be used to identify an unreliable no-PEI detection, while conversely concluding on a reliable no-PEI detection in case none of the individual criteria of the criteria combination indicates an unreliable PEI detection.

For instance, the first and second criteria can be combined, such that a no-PEI detection can be considered reliable if neither the first nor the second criterion indicates a non-reliable no-PEI detection. In particular, if the UE determines that the PEI resource occurs during a SI modification period or if the UE determines that the PEI resource occurs during a DL reference signal modification period, the UE will not trust the no-PEI detection and will nonetheless proceed to monitor for a paging DCI, even though the UE could not detect a PEI.

As another example, the first and third criteria can be combined, such that a no-PEI detection can be considered reliable if neither the first nor the third criterion indicates a non-reliable no-PEI detection. Similarly, the second and third criteria can be combined to form a new determination by the UE, where a no-PEI detection can be considered reliable if neither the second nor the third criterion indicates a non-reliable no-PEI detection.

Likewise, three of the above four criteria can be combined, such as the first, second and third criterions.

By considering more than one criterion, this fifth solution allows to cover more cases where the no-PEI detection should be considered unreliable from the UE perspective and should thus be mistrusted. Therefore, this fifth solution would allow the UE to receive the paging DCI in more scenarios where the UE failed to detect the PEI that was actually transmitted by the gNB.

In the above described five solutions, the improved paging procedure was assumed for sake of simplicity to comprise performing or skipping the monitoring for the paging DCI, without any further description of subsequent steps. Nonetheless, according to a further respective optional implementation, the improved paging procedure according to any of the first to firth solutions described above can further include the process of receiving a paging message from the gNB as indicated according to the paging DCI. Typically, the UE will also search among a plurality of paging records of the paging message, for a paging record that is addressed to the UE. In such a case, that paging record addressed to the UE will be processed further by the UE (see e.g. Fig. 7).

In the above described five solutions, the improved paging procedure was assumed for sake of simplicity to include the transmission of the PEI by the gNB and the corresponding detection of the PEI by the UE, without providing details as to how the PEI is exchanged between the gNB and the UE. Presently, 3GPP has not finalized an agreement on how the PEI will be implemented in the currently standardized 5G 3GPP communication systems. As already presented above, there are several potential indication methods of the PEI, all of which would be possible for the above described five solutions of the improved paging procedure, in particular covering:

- DCI-based indication, e.g. based on

    ◦ Extending existing DCI format 1_0 or 2_6
    ◦ New DCI format

- Reference-signal-based or sequence-based indication, e.g. based on TRS/CSI-RS or SSS (Secondary Synchronization Signal).

Put more generally, PEI can be carried by a downlink control information message transmitted by the radio base station to the UE, wherein detecting the paging early indication includes the reception of the DCI message. Alternatively, the PEI can be transmitted as a reference signal or a synchronization signal from the radio base station, wherein detecting the paging early indication includes detecting the presence of the reference signal or synchronization signal. Still alternatively, the PEI can be transmitted as a particular sequence of a reference signal or of a synchronization signal from the radio base station, wherein detecting the paging early indication includes detecting the presence of the particular sequence of the reference signal or of the synchronization signal.

Moreover, the configuration details of the PEI depend on how the PEI is actually implemented. According to one example, however, the PEI configuration can define the time resources and/or the frequency resources on which the PEI will be transmitted by the gNB. According to another additional optional solution, the PEI configuration may even include how the PEI is transmitted, e.g. as an existing or new DCI format or as a reference signal or a synchronization signal.

The above solutions are e.g. applicable to UEs in the idle or inactive state.

*Further Aspects*

According to a first aspect, a user equipment, is provided that includes the following. A processor of the UE operates a paging function that includes monitoring of a downlink control channel for receiving, from a radio base station, a paging downlink control information, DCI, at a paging occasion based on whether a paging early indication, PEI, is detected at a preceding PEI resource monitored by the UE. In case the receiver does not detect the PEI at the monitored paging early indication resource,

the processor determines to monitor for receiving the paging DCI at the paging occasion subsequent to the monitored PEI resource, in case a PEI detection is not reliable,

the processor determines that monitoring for receiving the paging DCI at the paging occasion subsequent to the monitored PEI resource is not required, in case a PEI detection is reliable.

According to a second aspect provided in addition to the first aspect, the processor determines whether the monitored paging early indication resource occurs during a system information modification period, during which the UE is to monitor for modified system information. The paging early indication detection is assumed to not be reliable in case the determination of the processor determines that the monitored paging early indication resource occurs during the system information modification period. In an optional implementation, the system information modification period begins after a system information change indication is received by the UE in an earlier paging occasion. In an optional implementation, the system information modification period ends with the radio frame that is a specific number of radio frames after that radio frame in which the system information change indication is received. In an optional implementation, the paging early indication is configured based on system information.

According to a third aspect provided in addition to the first or second aspect, the processor determines whether the monitored paging early indication resource occurs during a modification period of one or more downlink reference signals, during which the UE is to monitor for a change of a configuration of the one or more downlink reference signals. The paging early indication detection is assumed to not be reliable in case the determination of the processor determines that the monitored paging early indication resource occurs during the modification period of the one or more downlink reference signals.

According to a fourth aspect provided in addition to the third aspect, the modification period of the one or more downlink reference signals is a system information modification period, during which the UE is to monitor for modified system information, including the change of the configuration of the one or more downlink reference signals. In an optional implementation, the one or more downlink reference signals are configured based on system information.

According to a fifth aspect, provided in addition to one of the first to fourth aspects, the processor determines whether the transmission or non-transmission of one or more downlink reference signals by the radio base station to the UE is always informed to the UE by the radio base station. The paging early indication detection is assumed to be reliable in case the determination of the processor determines that the transmission or non-transmission of the one or more downlink reference signals by the radio base station to the UE is always informed to the UE by the radio base station. In an optional implementation, the receiver receives information of the transmission nor non-transmission of the one or more downlink reference signals from the radio base station in a paging DCI or a message of the Radio Resource Connection, RRC, protocol.

According to a sixth aspect, provided in addition to the fifth aspect, the paging early indication detection is assumed to be reliable in case the determination of the processor determines that the transmission or non-transmission of the one or more downlink reference signals by the radio base station to the UE is always informed to the UE by the radio base station and the radio base station informs the UE that the one or more downlink reference signals are transmitted by the radio base station to the UE. The paging early indication detection is assumed to not be reliable in case the determination of the processor determines that the transmission or non-transmission of the one or more downlink reference signals by the radio base station to the UE is always informed to the UE by the radio base station and the radio base station informs the UE that the one or more downlink reference signals are not transmitted by the radio base station to the UE.

According to a seventh aspect provided in addition to the one of the first to sixth aspects, the processor determines whether the transmission or non-transmission of one or more downlink reference signals by the radio base station to the UE is always informed to the UE by the radio base station. The paging early indication detection is assumed to not be reliable in case the determination of the processor determines that the transmission or non-transmission of the one or more downlink reference signals by the radio base station to the UE is not always informed to the UE by the radio base station.

According to an eighth aspect provided in addition to one of the third to seventh aspects, the one or more downlink reference signals are usable by the UE to determine one or more of a time synchronization and a frequency synchronization with the radio base station. In an optional implementation, the one or more downlink reference signals is one or more of a tracking reference signal, TRS, and a Channel State Information Reference Signal, CSI-RS,

According to a ninth aspect provided in addition to one of the fifth to eighth aspects, whether or not the transmission or non-transmission of the one or more downlink reference signals by the radio base station to the UE is always informed to the UE by the radio base station is configurable by the radio base station, optionally by one or more of system information and a message transmitted by the radio base station to the UE.

According to a tenth aspect provided in addition to one of the first to ninth aspects, the paging early indication detection is assumed to not be reliable in case any one criterion out of two or more of the following criteria is fulfilled:

- the processor determines that the monitored paging early indication resource occurs during a system information modification period,
- the processor determines that the monitored paging early indication resource occurs during a modification period of the one or more downlink reference signals,
- the processor determines that the transmission or non-transmission of one or more downlink reference signals by the radio base station to the UE is not always informed to the UE by the radio base station, and
- the processor determines that the transmission or non-transmission of the one or more downlink reference signals by the radio base station to the UE is always informed to the UE by the radio base station and the radio base station informs the UE that the one or more downlink reference signals are not transmitted by the radio base station to the UE.

According to an eleventh aspect, provided in addition to one of the first to tenth aspects, in case the receiver of the UE detects the paging early indication, the processor determines whether or not to monitor for receiving the paging DCI at the paging occasion subsequent to the monitored paging early indication resource, based on the paging early indication.

According to a twelfth aspect, provided in addition to one of the first to eleventh aspects, the paging function further includes receiving of a paging message from the radio base station as indicated by the paging DCI. The paging function further comprises that the processor searches, among a plurality of paging records of the paging message, a paging record addressed to the UE.

According to a thirteenth aspect, provided in addition to one of the first to twelfth aspects, the paging early indication is carried by a downlink control information message transmitted by the radio base station to the UE, wherein the detecting the paging early indication includes the reception of the DCI message,

or

wherein the paging early indication is a reference signal or a synchronization signal transmitted from the radio base station, wherein detecting the paging early indication includes detecting the presence of the reference signal or synchronization signal,

or

wherein the paging early indication is a particular sequence of a reference signal or of a synchronization signal transmitted from the radio base station, wherein detecting the paging early indication includes detecting the presence of the particular sequence of the reference signal or of the synchronization signal.

In an optional implementation of the thirteenth aspect, the configuration of the paging early indication, includes one or more of

- the configuration of one or more of time resources and frequency resources on which the paging early indication is transmitted by the radio base station, and
- how the paging early indication is transmitted, such as in a DCI or as a reference signal.

According to a fourteenth aspect, a method is provided comprising the following steps performed by a UE:

operating a paging function that includes monitoring of a downlink control channel for receiving, from a radio base station, a paging downlink control information, DCI, at a paging occasion based on whether a paging early indication is detected at a preceding paging early indication resource monitored by the UE,
in case the paging early indication is not detected at the monitored paging early indication resource,

determining to monitor for receiving the paging DCI at the paging occasion subsequent to the monitored paging early indication resource, in case a paging early indication detection is not reliable,

determining that monitoring for receiving the paging DCI at the paging occasion subsequent to the monitored paging early indication resource is not required, in case a paging early indication detection is reliable.

According to a fifteenth aspect, an integrated circuit is provided, which controls a process of a user equipment, the process comprising the following steps performed by the user equipment:

operating a paging function that includes monitoring of a downlink control channel for receiving, from a radio base station, a paging downlink control information, DCI, at a paging occasion based on whether a paging early indication is detected at a preceding paging early indication resource monitored by the UE,

in case the paging early indication is not detected at the monitored paging early indication resource,

determining to monitor for receiving the paging DCI at the paging occasion subsequent to the monitored paging early indication resource, in case a paging early indication detection is not reliable,

determining that monitoring for receiving the paging DCI at the paging occasion subsequent to the monitored paging early indication resource is not required, in case a paging early indication detection is reliable.

*Hardware and Software Implementation of the present disclosure*

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto.

The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g. cellular (cell) phone, smart phone), a tablet, a personal computer (PC) (e.g. laptop, desktop, netbook), a camera (e.g. digital still/video camera), a digital player (digital audio/video player), a wearable device (e.g. wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g. an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

(Uplink/Downlink/Sidelink)

The present disclosure may be applied to any of uplink, downlink and sidelink.
The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).
PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.
In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments. The present embodiments are, therefore, to be considered in all respects to be illustrative and not restrictive.

**Claims**

1. A user equipment, UE, comprising:

   a processor, which in operation, operates a paging function that includes monitoring of a downlink control channel for receiving, from a radio base station, a paging downlink control information, DCI, at a paging occasion based on whether a paging early indication is detected at a preceding paging early indication resource monitored by the UE,
   in case the receiver does not detect the paging early indication at the monitored paging early indication resource,

   the processor, when in operation, determines to monitor for receiving the paging DCI at the paging occasion subsequent to the monitored paging early indication resource, in case a paging early indication detection is not reliable,
   the processor, when in operation, determines that monitoring for receiving the paging DCI at the paging occasion subsequent to the monitored paging early indication resource is not required, in case a paging early indication detection is reliable.

2. The UE according to claim 1, wherein the processor, when in operation, determines whether the monitored paging early indication resource occurs during a system information modification period, during which the UE is to monitor for modified system information,
   wherein the paging early indication detection is assumed to not be reliable in case the determination of the processor determines that the monitored paging early indication resource occurs during the system information modification period,
   optionally wherein the system information modification period begins after a system information change indication is received by the UE in an earlier paging occasion, and optionally wherein the system information modification period ends with the radio frame that is a specific number of radio frames after that radio frame in which the system information change indication is received,
   optionally wherein the paging early indication is configured based on system information.

3. The UE according to claim 1 or 2, wherein the processor, when in operation, determines whether the monitored paging early indication resource occurs during a modification period of one or more downlink reference signals, during which the UE is to monitor for a change of a configuration of the one or more downlink reference signals,
   wherein the paging early indication detection is assumed to not be reliable in case the determination of the processor determines that the monitored paging early indication resource occurs during the modification period of the one or more downlink reference signals.

4. The UE according to claim 3, wherein the modification period of the one or more downlink reference signals is a system information modification period, during which the UE is to monitor for modified system information, including the change of the configuration of the one or more downlink reference signals, and
   optionally wherein the one or more downlink reference signals are configured based on system information.

5. The UE according to any one of claims 1 to 4, wherein the processor, when in operation, determines whether the transmission or non-transmission of one or more downlink reference signals by the radio base station to the UE is always informed to the UE by the radio base station,
wherein the paging early indication detection is assumed to be reliable in case the determination of the processor determines that the transmission or non-transmission of the one or more downlink reference signals by the radio base station to the UE is always informed to the UE by the radio base station,
optionally wherein the receiver, when in operation, receives information of the transmission nor non-transmission of the one or more downlink reference signals from the radio base station in a paging DCI or a message of the Radio Resource Connection, RRC, protocol.

6. The UE according to claim 5, wherein the paging early indication detection is assumed to be reliable in case the determination of the processor determines that the transmission or non-transmission of the one or more downlink reference signals by the radio base station to the UE is always informed to the UE by the radio base station and the radio base station informs the UE that the one or more downlink reference signals are transmitted by the radio base station to the UE, and
wherein the paging early indication detection is assumed to not be reliable in case the determination of the processor determines that the transmission or non-transmission of the one or more downlink reference signals by the radio base station to the UE is always informed to the UE by the radio base station and the radio base station informs the UE that the one or more downlink reference signals are not transmitted by the radio base station to the UE.

7. The UE according to any one of claims 1 to 6, wherein the processor, when in operation, determines whether the transmission or non-transmission of one or more downlink reference signals by the radio base station to the UE is always informed to the UE by the radio base station,
wherein the paging early indication detection is assumed to not be reliable in case the determination of the processor determines that the transmission or non-transmission of the one or more downlink reference signals by the radio base station to the UE is not always informed to the UE by the radio base station.

8. The UE according to any one of claims 3-7, wherein the one or more downlink reference signals are usable by the UE to determine one or more of a time synchronization and a frequency synchronization with the radio base station, optionally wherein the one or more downlink reference signals is one or more of a tracking reference signal, TRS, and a Channel State Information Reference Signal, CSI-RS,

9. The UE according to any one of claims 5-8, wherein whether or not the transmission or non-transmission of the one or more downlink reference signals by the radio base station to the UE is always informed to the UE by the radio base station is configurable by the radio base station, optionally by one or more of system information and a message transmitted by the radio base station to the UE.

10. The UE according to any one of claims 1 to 9, wherein the paging early indication detection is assumed to not be reliable in case any one criterion out of two or more of the following criteria is fulfilled:

   ◦ the processor determines that the monitored paging early indication resource occurs during a system information modification period,
   ◦ the processor determines that the monitored paging early indication resource occurs during a modification period of the one or more downlink reference signals,
   ◦ the processor determines that the transmission or non-transmission of one or more downlink reference signals by the radio base station to the UE is not always informed to the UE by the radio base station, and
   ◦ the processor determines that the transmission or non-transmission of the one or more downlink reference signals by the radio base station to the UE is always informed to the UE by the radio base station and the radio base station informs the UE that the one or more downlink reference signals are not transmitted by the radio base station to the UE.

11. The UE according to any one of claims 1 to 10, wherein in case the receiver of the UE detects the paging early indication, the processor, when in operation, determines whether or not to monitor for receiving the paging DCI at the paging occasion subsequent to the monitored paging early indication resource, based on the paging early indication.

12. The UE according to any one of claims 1 to 11, wherein the paging function further includes receiving of a paging message from the radio base station as indicated by the paging DCI, and wherein the paging function further comprises that the processor, when in operation, searches, among a plurality of paging records of the paging message, a paging record addressed to the UE.

13. The UE according to any one of claims 1 to 12, wherein the paging early indication is carried by a downlink control information message transmitted by the radio base station to the UE, wherein the detecting the paging early indication includes the reception of the DCI message,

or

wherein the paging early indication is a reference signal or a synchronization signal transmitted from the radio base station, wherein detecting the paging early indication includes detecting the presence of the reference signal or synchronization signal,

or

wherein the paging early indication is a particular sequence of a reference signal or of a synchronization signal transmitted from the radio base station, wherein detecting the paging early indication includes detecting the presence of the particular sequence of the reference signal or of the synchronization signal,

optionally wherein the configuration of the paging early indication, includes one or more of

- the configuration of one or more of time resources and frequency resources on which the paging early indication is transmitted by the radio base station, and
- how the paging early indication is transmitted, such as in a DCI or as a reference signal.

14. A method comprising the following steps performed by a user equipment, UE:

operating a paging function that includes monitoring of a downlink control channel for receiving, from a radio base station, a paging downlink control information, DCI, at a paging occasion based on whether a paging early indication is detected at a preceding paging early indication resource monitored by the UE,
in case the paging early indication is not detected at the monitored paging early indication resource,

determining to monitor for receiving the paging DCI at the paging occasion subsequent to the monitored paging early indication resource, in case a paging early indication detection is not reliable,
determining that monitoring for receiving the paging DCI at the paging occasion subsequent to the monitored paging early indication resource is not required, in case a paging early indication detection is reliable.

15. An integrated circuit, which, in operation, controls a process of a user equipment, the process comprising the following steps performed by the user equipment:

operating a paging function that includes monitoring of a downlink control channel for receiving, from a radio base station, a paging downlink control information, DCI, at a paging occasion based on whether a paging early indication is detected at a preceding paging early indication resource monitored by the UE,
in case the paging early indication is not detected at the monitored paging early indication resource,

determining to monitor for receiving the paging DCI at the paging occasion subsequent to the monitored paging early indication resource, in case a paging early indication detection is not reliable,
determining that monitoring for receiving the paging DCI at the paging occasion subsequent to the monitored paging early indication resource is not required, in case a paging early indication detection is reliable.

AMF/UPF        AMF/UPF

5GC

NG-RAN

gNB        gNB

Xn

ng-eNB        ng-eNB

Fig. 1

gNB or ng - eNB

Inter Cell RRM

RB Control

Connection Mobility Cont.

Radio Admission Control

Measurement Configuration & Provision

Dynamic Resource Allocation (Scheduler)

NG - RAN

AMF

NAS Security

Idle State Mobility Handling

UPF

Mobility Anchoring

PDU Handling

SMF

UE IP address allocation

PDU Session Control

internet

5 GC

Fig. 2

UE        gNB        AMF

*INITIAL CONTEXT SETUP REQUEST*

*SecurityModeCommand*

*SecurityModeComplete*

*RRCReconfiguration*

*RRCReconfigurationComplete*

*INITIAL CONTEXT SETUP RESPONSE*

Fig. 3

**Enhanced Mobile Broadband**

Gigabytes in a second

3D video, UHD screens

Work and play in the cloud

Smart Home/Building

Augmented reality

Mission critical application e.g. e-health

Smart City

Industry automation

Self Driving Car

**Massive Machine Type Communication**

**Ultra-reliable and Low Latency Communication**

Fig. 4

| NSSF | NEF | NRF | PCF | UDM | AF |
|------|-----|-----|-----|-----|-----|

Nnssf    Nnef    Nnrf    Npcf    Nudm    Naf

Nausf    Namf    Nsmf

| AUSF | AMF | SMF |
|------|-----|-----|

Fig. 5

N1    N2    N4

| UE | (R)AN | UPF | DN |
|----|-------|-----|-----|

N3    N6

N9

NR RRC Connected state

Resume/ Release
with Suspend

Establish/
Release

NR RRC Inactive state

Release

NR RRC Idle state

## Fig. 6

UE                                                          BS

paging configuration information

monitoring for
paging DCI

paging DCI

paging message

search paging message
for paging record

## Fig. 7

channel

transceiver (transmitter, receiver)

input/output node

processing circuitry

communication device, UE

transceiver (transmitter, receiver)

input/output node

processing circuitry

scheduling device, BS, eNB/gNB

## Fig. 8

paging DCI monitoring and reception

paging early indication detection and reception

paging function operation circuitry

communication device, UE

## Fig. 9

Fig. 10

Fig. 11

Fig. 12

gNB

positive
PEI

Paging
DCI

negative
PEI

positive
PEI

Paging
DCI

PEI
resource

PO

PEI
resource

PO

PEI
resource

PO

UE

| PEI
detected | paging DCI
monitoring and
reception |

| PEI
not
detected | no paging DCI
monitoring and
reception |

| PEI
not
detected | paging DCI
monitoring and
reception |

PEI detection
considered reliable

PEI detection
considered not reliable

**Fig. 13**

Fig. 14

Fig. 16

Fig. 15

Fig. 17

**UE Start**

perform paging early indication detection at PEI resource

PEI detected?

No → determine whether the transmission or non-transmission of the DL RS is always informed by the gNB to the UE

Yes → PEI indicates to monitor for paging?

DL RS availability always informed?

Yes →

No → not required to monitor for paging DCI at PO

PEI indicates to monitor for paging? No →

Yes → monitor for paging DCI at PO

**Fig. 18**

**UE Start**

perform paging early indication detection at PEI resource

PEI detected?

No → determine whether the transmission or non-transmission of the DL RS is always informed by the gNB to the UE

Yes → PEI indicates to monitor for paging?

DL RS availability always informed?

Yes → UE informed that DL RS is available?

No → not required to monitor for paging DCI at PO

No → not required to monitor for paging DCI at PO

Yes → monitor for paging DCI at PO

PEI indicates to monitor for paging? No → not required to monitor for paging DCI at PO

Yes → monitor for paging DCI at PO

**Fig. 19**

Europäisches
Patentamt

European
Patent Office

Office européen
des brevets

**EUROPEAN SEARCH REPORT**

Application Number

EP 21 15 1634

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/158446 A1 (SONY CORP [JP]; SONY EUROPE LTD [GB]) 22 August 2019 (2019-08-22) | 1,11-15 | INV. H04W52/02 H04W68/02 |
| Y | * page 10, line 24 * <br> * page 10, line 32 - page 11, line 3 * <br> * page 11, lines 26-32 * <br> * page 15, lines 25-26 * <br> * page 16, lines 1-15 * <br> * figure 6 * | 2-10 | ADD. H04W68/00 H04W72/04 |
| X | ERICSSON: "Design of PDCCH-WUS", 3GPP DRAFT; R1-1912780, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20191118 - 20191122 9 November 2019 (2019-11-09), XP051823592, Retrieved from the Internet: URL:https://ftp.3gpp.org/tsg_ran/WG1_RL1/T SGR1_99/Docs/R1-1912780.zip R1-1912780 Design of PDCCH-WUS.docx [retrieved on 2019-11-09] * paragraph [02.1] * <br> * paragraph [02.5] * | 1,11-15 | |
| Y | US 2019/150114 A1 (LIU LE [US] ET AL) 16 May 2019 (2019-05-16) * paragraph [0006] * <br> * paragraphs [0111] - [0112] * <br> * figure 6 * | 2,10 | |

-/--

TECHNICAL FIELDS
SEARCHED (IPC)

H04W

The present search report has been drawn up for all claims

| Place of search | Date of completion of the search | Examiner |
|---|---|---|
| Munich | 1 June 2021 | Costa, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 15 1634

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2020/224898 A1 (ERICSSON TELEFON AB L M [SE]) 12 November 2020 (2020-11-12)<br>* page 14, lines 1-19 *<br>* page 15, lines 5-9 *<br>* page 17, lines 4-28 *<br>* page 18, line 22 - page 19, line 17 *<br>* page 21, line 24 - page 22, line 12 *<br>* figure 4 *<br>----- | 3-9 | |

TECHNICAL FIELDS
SEARCHED        (IPC)

The present search report has been drawn up for all claims

| Place of search | Date of completion of the search | Examiner |
|---|---|---|
| Munich | 1 June 2021 | Costa, Elena |

CATEGORY OF CITED DOCUMENTS

X : particularly relevant if taken alone
Y : particularly relevant if combined with another
      document of the same category
A : technological background
O : non-written disclosure
P : intermediate document

T : theory or principle underlying the invention
E : earlier patent document, but published on, or
      after the filing date
D : document cited in the application
L : document cited for other reasons

 .......................................................................
& : member of the same patent family, corresponding
      document

EPO FORM 1503 03.82 (P04C01)

## ANNEX TO THE EUROPEAN SEARCH REPORT
## ON EUROPEAN PATENT APPLICATION NO.

EP 21 15 1634

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2021

| Patent document cited in search report | | Publication date | Patent family member(s) | | Publication date |
|---|---|---|---|---|---|
| WO 2019158446 | A1 | 22-08-2019 | DE | 112019000822 T5 | 22-10-2020 |
| | | | EP | 3741166 A1 | 25-11-2020 |
| | | | KR | 20200119256 A | 19-10-2020 |
| | | | WO | 2019158446 A1 | 22-08-2019 |
| US 2019150114 | A1 | 16-05-2019 | BR | 112020009261 A2 | 10-11-2020 |
| | | | BR | 112020009264 A2 | 20-10-2020 |
| | | | CN | 111328458 A | 23-06-2020 |
| | | | CN | 111328461 A | 23-06-2020 |
| | | | EP | 3711370 A1 | 23-09-2020 |
| | | | EP | 3711399 A1 | 23-09-2020 |
| | | | JP | 2021502772 A | 28-01-2021 |
| | | | JP | 2021502776 A | 28-01-2021 |
| | | | KR | 20200083482 A | 08-07-2020 |
| | | | KR | 20200083483 A | 08-07-2020 |
| | | | SG | 11202003205T A | 28-05-2020 |
| | | | SG | 11202003239T A | 28-05-2020 |
| | | | TW | 201924377 A | 16-06-2019 |
| | | | TW | 201924406 A | 16-06-2019 |
| | | | US | 2019150094 A1 | 16-05-2019 |
| | | | US | 2019150114 A1 | 16-05-2019 |
| | | | WO | 2019094480 A1 | 16-05-2019 |
| | | | WO | 2019094494 A1 | 16-05-2019 |
| WO 2020224898 | A1 | 12-11-2020 | NONE | | |

EPO FORM P0459

For more details about this annex : see Official Journal of the European Patent Office, No. 12/82